(19) Europäisches Patentamt
European Patent Office
Office européen des brevets

(11) EP 4 570 772 A1

(12) **EUROPEAN PATENT APPLICATION**

(43) Date of publication:
**18.06.2025 Bulletin 2025/25**

(21) Application number: **23217128.0**

(22) Date of filing: **15.12.2023**

(51) International Patent Classification (IPC):
***C04B 26/14*** *(2006.01)* ***C04B 26/16*** *(2006.01)*
***C04B 26/18*** *(2006.01)* ***C04B 40/00*** *(2006.01)*

(52) Cooperative Patent Classification (CPC):
(C-Sets available)
**C04B 40/0666; C04B 20/0096; C04B 26/14; C04B 26/16; C04B 26/18; C04B 40/0032; C04B 40/065;** C04B 2111/00715 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Hilti Aktiengesellschaft**
**9494 Schaan (LI)**

(72) Inventors:
- **Kumru, Memet-Emin**
**86199 Augsburg (DE)**
- **Martin-Lasanta, Ana-Maria**
**35398 Gießen (DE)**

(74) Representative: **Hilti Aktiengesellschaft**
**Corporate Intellectual Property**
**Feldkircherstrasse 100**
**Postfach 333**
**9494 Schaan (LI)**

(54) **MULTI-COMPONENT RESIN SYSTEM SUITABLE FOR CHEMICAL DOWELS HAVING A HIGH FILLING DEGREE**

(57) Multi-component resin system suitable for chemical dowels, the multi-component resin system comprising a resin component comprising at least one reactive resin; and a hardener component comprising at least one hardener for the at least one reactive resin contained in the resin component, wherein the multi-component resin system comprises at least two fillers, wherein the at least two fillers comprise a first filler and a second filler, characterized in that the multi-component resin system has a filling degree of more than 55 wt.-%.

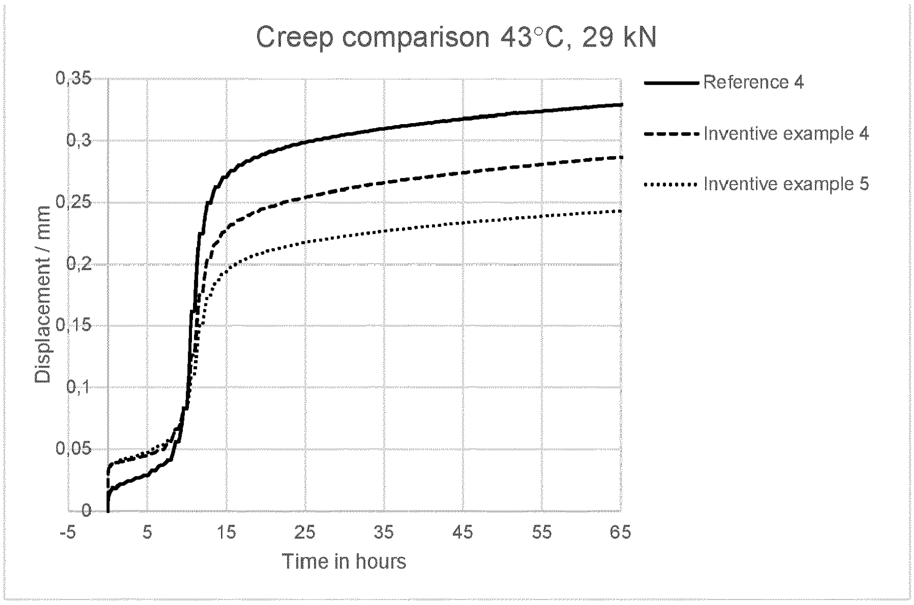


Figure 1

EP 4 570 772 A1

(52) Cooperative Patent Classification (CPC): (Cont.)

C-Sets
**C04B 26/14, C04B 7/02, C04B 14/06, C04B 14/062, C04B 14/064, C04B 18/08, C04B 20/0096, C04B 22/064, C04B 40/0032, C04B 40/065**

## Description

The present invention relates to a multi-component resin system suitable for chemical dowels, the multi-component resin system comprising a resin component (A) comprising at least one reactive resin; and a hardener component (B) comprising at least one hardener for the at least one reactive resin contained in the resin component (A); wherein the multi-component resin system of A + B further comprises at least two fillers ($F_1$, $F_2$).

The present invention furthermore relates to a process for preparing said multi-component resin system.

Finally, the present invention further relates to the use of the multi-component resin system for fixing anchoring elements in a hole or crevice in a building substrate, as well as to a method of fixing an anchoring element in a hole or crevice in a building substrate, comprising introducing the multi-component resin system and an anchoring element into the hole or crevice, and allowing the multi-component resin system to cure.

## Background

During the service life of a chemical anchor, i.e., under sustain loads also called quasi permanent loads, adhesive bonded anchors on concrete are prone to creep, what may considerably affect their long-term performance as for example described in: Nilforoush, R.; Nilsson, M.; Söderlind, G.; Elfgren, L.; "Long-Term Performance of Adhesive Bonded Anchors", Structural Journal, 2016, 113 (2), 251-261.

Creep can occur because of long-term exposure to high levels of stress. Moreover, creep is more severe at higher temperatures, meaning that the material suffers larger deformations under same load if it is heated for a certain period.

The creep characterization of the adhesive bonded anchor plays an important role in the reliability and durability (i.e., the design) of the anchoring point in civil engineering. The tests required to check the creep behavior of the loaded fastener at RT and maximum long-term temperature are described by the EAD 330499-00-0601 (Bonded fasteners for use in concrete).

Therefore, it is the general object of the present invention to show chemical anchors having an improved creep behavior in comparison to the prior art.

## Summary of the Invention

It has now been surprisingly found that above-mentioned object of the present invention is solved by a multi-component resin system suitable for chemical dowels, the multi-component resin system comprising a resin component (A) comprising at least one reactive resin, and a hardener component (B) comprising at least one hardener for the at least one reactive resin contained in the resin component (A), wherein the multi-component resin system comprises at least two fillers ($F_1$, $F_2$), wherein the at least two fillers ($F_1$, $F_2$) comprise a first filler ($F_1$) and a second filler ($F_2$), characterized in that the multi-component resin system has a filling degree of more than 55 wt.-%.

It has been further surprisingly found that above-mentioned object can be achieved bv a process for preparing a multi-component resin system suitable for chemical dowels, the process comprising the steps of

1) Providing at least two fillers ($F_1$, $F_2$), wherein the at least wo fillers each have an average particle size $d_{50}$ in the range of from 1 to 800 $\mu$m and wherein the average particle sizes $d_{50}$ of each of the at least two fillers ($F_1$, $F_2$) differ from each other of the at least two fillers ($F_1$, $F_2$);
2) Providing a list of fillers comprising the at least two fillers ($F_1$, $F_2$);
3) Selecting two selected fillers ($F_{S1}$, $F_{S2}$) from the list of fillers, having the largest ratio of average particle sizes $d_{50}$ and removing the two selected fillers ($F_{S1}$, $F_{S2}$) from the list of fillers;
4) Calculating the maximum packing density $\Phi$ und the grain volumes of a mixture of the two selected fillers ($F_{S1}$) and ($F_{S2}$), ($y_1$) and ($y_2$), for a maximum packing density $\Phi$;
5) Determining the average particle size $d_{50}$ of the mixture of the two selected fillers ($F_{S1}$) and ($F_{S2}$);
6) Adding the mixture of the two selected fillers ($F_{S1}$) and ($F_{S2}$) to the list of fillers;
7) If the list of fillers comprises more than one filler, reprocessing steps 3-6;
8) Calculating the mass quantity ratios of the at least two fillers ($F_1$, $F_2$) from the calculated grain volume ratios via the bulk density of the at least two fillers ($F_1$, $F_2$);
9) Providing a resin component (A) comprising at least one reactive resin, and a hardener component (B) comprising at least one hardener for the at least one reactive resin contained in the resin component (A);
10) Mixing the resin component (A) and/or the hardener component (B) with the at least two fillers ($F_1$, $F_2$) in the quantity ratio as determined in step 6) yielding the multi-component resin system.

Preferably, step 4 of the process according to the present invention is preferably carried out using the Toufar model by formula (I)

$$packing\ density\ \Phi = \frac{1}{\frac{y_1}{\Phi_1}+\frac{y_2}{\Phi_2}-y_2*\left(\frac{1}{\Phi_2}-1\right)*\frac{d_{50,2}-d_{50,1}}{d_{50,1}+d_{50,2}}*k_s} \quad (I),$$

wherein

$$k_s = 1-\frac{1-(1+4*x)}{(1+x)^4}, \quad (II)$$

$$x = \frac{y_1}{y_2}*\frac{\frac{\Phi_2}{\Phi_1}}{1-\Phi_2}, \quad (III)$$

and

$$y_2 = 1-y_1 \quad (IV)$$

and wherein

| | |
|---|---|
| $d_{50,1}$,$d_{50,2}$ | = the average particle sizes of the selected two fillers ($F_{S1}$, $F_{S2}$) |
| $\Phi_1$,$\Phi_2$ | = the packing densities of the selected two fillers ($F_{S1}$, $F_{S2}$); quotient of grain density and bulk density |
| $y_1$,$y_2$ | = the grain volumes of the two selected fillers ($F_{S1}$, $F_{S2}$); $0 < y_1,y_2 < 1$ |
| $k_s$ | = a factor that accounts for statistical possibility of an optimal packing as a function of amounts and packing densities, quotient of bulk density of $F_{S2}$ and void volume of $F_{S1}$ |
| x | = the quotient of the bulk volume of $F_{S2}$ and the void volume of $F_{S1}$ |

wherein the grain density, the grain volume, and the void volume are preferably determined using a pycnometer, and wherein the bulk density is preferably determined using a measuring cylinder;

Preferably, step 5 of the process according to the present invention is carried out The process according to claims 5 or 6, wherein step 5 is carried out by preparing the mixture of the at least two selected fillers ($F_{S1}$) and ($F_{S2}$) and measuring the average particle size $d_{50}$ or by determining a sieve line for the mixture of the at least two selected fillers from the sieve lines of each of the at least two selected fillers ($F_{S1}$) and ($F_{S2}$) and determining the average particle size $d_{50}$ therefrom.

Furthermore, it has been surprisingly found that above-mentioned objected is achieved by a mortar mass prepared by mixing the resin component (A) and the hardener component (B) of the multi-component resin system according to the present invention.

Moreover, surprisingly, the object of the present invention is achieved by the use of the mortar composition according to the present invention or the multi-component resin system according to the present invention for chemically fixing structural elements in holes, in particular drilled holes, or crevices and the use of the at least two fillers (F1, F2) in the mortar composition according to the present invention or the multi-component resin system according to the present invention to increase the creep resistance thereof.

## Detailed Description of the Invention

As outlined above, the present invention provides a multi-component resin system suitable for chemical dowels, the multi-component resin system comprising a resin component (A) comprising at least one reactive resin, and a hardener component (B) comprising at least one hardener for the at least one reactive resin contained in the resin component (A), wherein the multi-component resin system comprises at least two fillers ($F_1$, $F_2$), wherein the at least two fillers ($F_1$, $F_2$) comprise a first filler ($F_1$) and a second filler ($F_2$), characterized in that the multi-component resin system has a filling degree of more than 55 wt.-%.

Figure 1 shows the creep performance of the Inventive Examples 4 and 5 vs Reference 4.

In the context of the present invention, the terms used herein and in the following description have the following meanings:

- "*aliphatic compounds*" are acyclic or cyclic, saturated, or unsaturated carbon compounds, excluding aromatic compounds,

- "*cycloaliphatic compounds*" or "alicyclic compounds" are compounds having a carbocyclic ring structure, excluding benzene derivatives or other aromatic systems,

- "*aromatic compounds*" are compounds that follow the Hückel (4n+2) rule, and

- "*amines*" are compounds derived from ammonia by replacement of one, two or three hydrogen atoms by hydrocarbon groups and having the general structures $RNH_2$ (primary amines), $R_2NH$ (secondary amines) and $R_3N$ (tertiary amines) (see: IUPAC Compendium of Chemical Terminology, 2nd Ed. (the "Gold Book"), Compiled by A. D. McNaught and A. Wilkinson, Blackwell Scientific Publications, Oxford (1997)),

- "*Salts*" are compounds composed of positively charged ions (cations) and negatively charged ions (anions). Ionic bonds are present between these ions. For example, the expression "*salts of nitric acid*" describes compounds that are derived from nitric acid ($HNO_3$) and include a nitrate ($NO_3^-$) as an anion. The expression "*salts of trifluoromethanesulfonic acid*" describes compounds derived from trifluoromethanesulfonic acid ($CF_3SO_3H$) and comprise as an anion a triflate ($CF_3SO_3^-$). The term salt in the sense of the present invention also includes the corresponding hydrates of the salts. The salts(s) which are used as accelerators are also referred to as salts in the sense of the present invention,

- the terms "a" or "an" as articles preceding a chemical compound class mean that one or more compounds falling under that chemical compound class may be meant. In a preferred embodiment, these articles mean only a single compound,

- the term "*at least one*" means numerically "*one or more*". In a preferred embodiment, the term numerically means "one",

- the terms "*include*" and "comprising" mean that there may be other components in addition to those mentioned. These terms are meant inclusively and therefore include "*consisting of*". "*Consisting of*" is meant conclusively and means that no further constituents may be present. In an embodiment, the terms "*comprise*" or "*comprising*" mean "*consisting of*",

- a range delimited by numbers, e.g., "*from 80°C to 120°C*" means that the two corner values and each value within that range are individually disclosed,

As stated above, the present invention relates in one embodiment to a multi-component resin system. "*Multi-component*" systems in the sense of the present invention contain several components stored separately from each other, so that curing of the ingredients contained in the components occurs only after the components have been mixed.

- the term *'creep'* denotes the tendency of a solid material to move slowly or deform permanently under the influence of persistent mechanical stresses like e.g., sustained loads.

Without wishing to be bound by theory it is believed that the advantage of the present invention is that a high filling degree can be achieved without negatively affecting the viscosity of the multi-component resin system. As this multi-component resin system is suitable for chemical dowels, it must fulfill certain requirements in view of viscosity to be used in a chemical dowel application. Earlier attempts to raise the filling degree of a multi-component resin system for chemical dowels resulted in high viscosities rendering the resulting multi-component resin systems unusable in chemical dowel applications. The present invention now surprisingly found a multi-component resin system for chemical dowel application, which has a high filling degree without negatively impacting the viscosity.

Hence, the multi-component resin system preferably has a static viscosity of not higher than 1500 Pa s. Preferably, the viscosity of the multi-component resin system is not lower than 300 mPa s. If the viscosity is higher, the multi-component resin system cannot be reliably and applied in chemical dowels. On the other hand, if the viscosity is too low, the resulting mixture will not stay in place until being cured.

Preferably, the multi-component resin system according to the present invention has a packing density of more than 35%, preferably more than 45%, more preferably more than 55%, and most preferably more than 65%. It has been surprisingly found that higher packing densities can allow for higher filling degrees without negatively affecting the viscosity of the multi-component resin system.

In another preferred embodiment of the present invention, each of the fillers of the at least two fillers ($F_1$, $F_2$) are present independently of one another either in the resin component (A) or in the hardener component (B) or in both components (A) and (B), wherein the quantity ratio of the fillers to one another is selected such that the packing density $\Phi$ calculated, preferably by the Toufar model, for the at least two fillers ($F_1$, $F_2$) in a mortar mass obtainable by mixing the

components of the multi-component resin system is more than 35%, preferably more than 45%, more preferably more than 55%, and most preferably more than 65%, wherein the average particle size $d_{50}$ of each of the at least two fillers ($F_1$, $F_2$) differs from each other of the at least two fillers ($F_1$, $F_2$).

The Toufar model is based on a difference in average particles sizes of the fillers used for calculation. Hence, the filler should have different average particle sizes. Thus, preferably, in the multi-component resin system according to the present invention, the average particle size $d_{50}$ of the first filler ($F_1$) is in the range of from 10 to 800 $\mu$m, more preferably from 15 to 200 $\mu$m. Likewise, preferably, in the multi-component resin system according to the present invention, the average particle size $d_{50}$ of the second filler ($F_2$) is in the range of from 1 to 100 $\mu$m, more preferably from 2 to 50 $\mu$m.

In a preferred embodiment of the multi-component resin system according to the present invention, the at least two fillers ($F_1$, $F_2$) further comprise a third filler ($F_3$). The presence of a third filler improves the usage of voids in between the present filler particles and, hence, further improves the packing density and thus allows for higher filling degrees without negative impacting the viscosity of the multi-component resin system.

In such a preferred embodiment of the multi-component resin system according to the present invention, the average particle size $d_{50}$ of the third filler ($F_3$) is preferably in the range of from 0.1 to 30 $\mu$m, more preferably from 0.5 to about 15 $\mu$m.

Hence, most preferably, the average particle size $d_{50}$ of the first filler ($F_1$) is in the range of from 10 to 800 $\mu$m, more preferably from 15 to 200 $\mu$m, the average particle size $d_{50}$ of the second filler ($F_2$) is in the range of from 1 to 100 $\mu$m, more preferably from 2 to 50 $\mu$m, and the average particle size $d_{50}$ of the third filler ($F_3$) is preferably in the range of from 0.1 to 30 $\mu$m, more preferably from 0.5 to about 15 $\mu$m.

Also preferably, the size difference of the mean particle size $d_{50}$ of the filler having the largest mean particle size of the at least two fillers ($F_1$, $F_2$) to the filler having the lowest mean particle size of the at least two fillers ($F_1$, $F_2$) is in the range of from 100% to 1000%, preferably from 150% to 500%. The larger the difference between the particle sizes is, the more efficiently the finer particles can fill the voids in between the coarser particles, which results in a higher packing density and, thus, a higher filling degree without negatively impacting the viscosity of the multi-component resin system.

Likewise, preferably, the inherent packing densities of each of the at least two fillers ($F_1$, $F_2$) differ from each other of the at least two fillers ($F_1$, $F_2$) and is independently of each other in the range of from 20% to 60%, preferably from 25% to 55%, wherein the inherent packing density is the quotient of the grain density and bulk density of each filler of the at least two fillers ($F_1$, $F_2$).

In a preferred embodiment of the present invention, the at least two fillers ($F_1$, $F_2$) are independently from each other selected from a group consisting of oxides, hydroxides, sulfates, borates and nitrides of silicon, aluminum, iron, magnesium, calcium, barium, titanium, zirconium, sodium, potassium, ammonium, and their mixed oxides, hydroxides, sulfates, borates and nitrides, and mixtures thereof; are preferably selected from a group consisting of silica sand, glass, corundum, porcelain, earthenware, barite, feldspar, granulated blast furnace slag, gypsum, Portland cement, talc, fly ash, limestone, and mixtures thereof, preferably selected from the group consisting of calcium oxide, fly ash, silica sand, quartz powder, Portland cement, and mixtures thereof.

More preferably, the at least two fillers ($F_1$, $F_2$) may be selected from graphite, nitrides of B or Si, oxides of Ti, Zn, Ca, Mg or Fe, fly ash, sepiolithe, cement, glass powder, metal powder, $Mg(OH)_2$ and mixtures thereof. In preferred embodiments, the at least two fillers ($F_1$, $F_2$) are selected from Nekafin 2, Microsit® H20, Strobelsand P10, Supracem 45 and mixtures thereof.

The filler may optionally be functionalized. For example, the filler may be modified, i.e., surface modified, with a silane (S') containing at least one Si-bonded hydrolyzable group. Suitable silanes (S') for surface modification include but are not limited to, for example, 3-(meth)acryloyl-oxypropyltrialkoxysilane, 3-(meth)acryloyl-oxymethyltrialkoxysilane, 3-(meth)acryloyl-oxypropylmethyldialkoxysilane, 3-glycidyloxypropyltrialkoxysilane, glycidyloxymethyltrialkoxysilane, 3-glycidyloxypropylmethyldi-alkoxysilane, 2-(3,4-epoxycyclohexyl)ethyltrimethoxysilane, N-2-(aminoethyl)-3-aminopropylmethyldiethoxysilane, N-2-(aminoethyl)-3-aminopropyl-triethoxysilane, 3-aminopropyltrialkoxysilane, N-phenyl-3-aminoethyl-3-aminopropyl-trialkoxysilane, 2-aminoethyl-3-aminopropyl-trialkoxysilane, bis-(3-trialkoxysilylpropyl) amine, 3-mercaptopropyltrialkoxysilane, 3-mercaptopropylmethyldialkoxysilane, alkenylalkoxysilane, trialkoxysilylpropyldiethylenetetramine and/or tetraalkoxysilane, or a mixture of two or more thereof.

Preferred silanes (S') are those having reactive groups, such as epoxide groups or amino groups, and hydrolyzable groups bonded to Si, such as alkoxy (e.g., with 1 to 7 carbon atoms, such as methoxy or ethoxy) or halogeno, such as chloro.

In a preferred embodiment, the silane (S) is selected from 3-glycidyloxypropyltrialkoxysilane, such as 3-glycidyloxypropyltrimethoxysilane (GLYMO) or -ethoxysilane, Glycidyloxymethyltrialkoxysilane, such as glycidyloxymethyltrimethoxysilane or glycidyloxymethyltriethoxysilane, 3-glycidyloxypropylmethyldi-alkoxysilane, such as 3-glycidyloxypropylmethyldi-methoxysilane or 3-glycidyloxypropylmethyldi-ethoxysilane, 2-(3,4-epoxycyclohexyl)ethyltrimethoxysilane, N-2-(aminoethyl)-3-aminopropylmethyldiethoxysilane, N-2-(aminoethyl)-3-aminopropyl-triethoxysilane, 3-aminopropyltrialkoxysilane, such as 3-aminopropyl-trimethoxysilane (AMMO) or 3-aminopropyl-triethoxysilane (AMEO), N-phenyl-3-aminoethyl-3-aminopropyl-trialkoxysilane, such as N-phenyl-3-aminoethyl-3-aminopropyl-trimethoxysilane, 2-aminoethyl-3-aminopropyltrialkoxysilane, such as 2-aminoethyl-3-aminopropyl-trimethoxysilane (DAMO), bis-(3-trialkoxysilylpropyl)amine, such as bis-(3-trimethoxysilylpropyl)amine or bis-(3-triethoxysilylpropyl) amine, trialkoxysilylpropyldiethylenetetramine, such as trimethoxysilylpropyldiethylenetetramine (TRIAMO) or triethoxysilylpropyldiethylenetetramine, and/or tetraalkoxysilane, such as tetramethoxysilane, tetraethoxysilane or tetrapropoxysilane, or a mixture of two or more thereof. Particularly preferred silanes (S) are, for example, 3-aminopropyl-triethoxysilane or 3-glycidyloxypropyltrimethoxysilane, e.g., Dynasylan GLYMO from Evonik Industries, Germany.

The multi-component resin system according to the invention contains a resin component (A) comprising at least one reactive resin, and a hardener component (B) comprising at least one hardener for the at least one reactive resin contained in the resin component (A).

Preferred embodiments of the multi-component resin system according to the present invention are described in the following, wherein

(i) the at least one reactive resin in resin component (A) is a curable epoxy resin having an average epoxy functionality of 2 or greater, and the at least one curing agent in hardener component (B) is a curing agent for the curable epoxy resin, preferably at least one amine reactive to epoxy groups having an NH functionality of 2 or greater; or

(ii) the at least one reactive resin in resin component (A) is a free-radically curable vinyl ester resin, and the at least one curing agent in hardener component (B) is a curing agent for the free-radically curable vinyl ester resin, preferably a peroxide; or

(iii) the at least one reactive resin in resin component (A) is a curable isocyanate resin having an average NCO functionality of 2 or greater, and the at least one curing agent in hardener component (B) is a curing agent for the curable isocyanate resin, preferably an amine reactive to isocyanates having an average NH functionality of 2 or greater.

These preferred embodiments are disclosed in more detail in the following.

Epoxy-Amine-System (i)

In the following components (A) and (B) of an epoxy-amine-multicomponent resin system (i) are described in detail.

Resin component (A) of (i)

The epoxy resin component (A) of the multi-component resin system (i) according to the present invention typically comprises liquid and solid constituents. As a typically liquid component, at least one epoxy resin-based reactive synthetic resin ("*epoxy resin component (A)*") is usually included. According to the invention, "*epoxy resin*" is understood to mean a compound or the combination of two or more compounds containing a reactive epoxy group, also called oxirane group. Such an epoxy group is shown below:

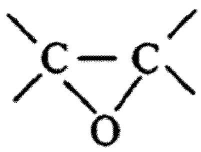

Suitable curable epoxy resins for use in resin component (A) of the multi-component resin system (i) of the present invention are many commercially available compounds known to those skilled in the art, which contain on average more than one epoxide group, preferably two epoxide groups, per molecule. These epoxy resins can be both saturated and unsaturated and aliphatic, alicyclic, aromatic, or heterocyclic and can also contain hydroxyl groups. They may further contain such substituents that do not cause interfering side reactions under the mixing or reaction conditions, for example, alkyl or aryl substituents, ether groups and the like. Within the scope of the invention, trimeric and tetrameric epoxides are also suitable.

Preferably, the epoxy resins are glycidyl ethers derived from polyhydric alcohols, particularly polyhydric phenols such as bisphenols and novolaks, especially those having an average glycidyl group functionality of 1.5 or greater, especially 2 or greater, for example from 2 to 10.

The epoxy resins may have an epoxy equivalent weight (EEW) of from 120 to 2000 g/EQ, preferably from 140 to 400. Mixtures of several epoxy resins can also be used.

Examples of polyhydric phenols used to prepare epoxy resins include resorcinol, hydroquinone, 2,2-bis(4-hydroxyphenyl)propane (bisphenol A), mixtures of isomers of dihydroxyphenylmethane (bisphenol F), tetrabromo bisphenol A, novolac types, 4,4'-dihydroxyphenylcyclohexane, and 4,4'-dihydroxy-3,3'-dimethyldiphenylpropane.

Epoxy-based monomers/resins useful in the present invention include, without limiting the scope of the invention, diglycidyl ethers of bisphenol A and F, and aliphatic and cycloaliphatic epoxides. Other examples include hexanediol diglycidyl ethers, trimethylolpropane triglycidyl ethers, bisphenol A epichlorohydrin resins, and/or bisphenol F epichlorohydrin resins, for example, having an average molecular weight of MW $\leq$ 2000 g/mol. Liquid diglycidyl ethers based on bisphenol A and/or F with an EEW of 150 to 300 g/EQ are preferred.

The EEW (epoxide equivalent weight) values are usually indicated on the starting materials by the manufacturers, or they are determined or calculated according to known methods. They indicate the amount in g of resin containing 1 mole of epoxy groups: EEW = MW / functionality.

The proportion of epoxy resin in the epoxy resin component (A) is >0 to 70% by weight, preferably 10 to 65% by weight and particularly preferably 30 to 60% by weight, based on the total weight of the epoxy resin component (A).

According to the invention, reactive diluents, such as glycidyl ethers of aliphatic, alicyclic, or aromatic mono- or polyalcohols, which have a lower viscosity than epoxides containing aromatic groups, can be used as a further liquid component. Examples of reactive diluents are monoglycidyl ethers, e.g. o-cresyl glycidyl ethers, and glycidyl ethers with an epoxide functionality of at least 2, such as 1,4-butanediol diglycidyl ether (BDDGE), cyclohexanedimethanol diglycidyl ether and hexanediol diglycidyl ether, as well as tri- or higher glycidyl ethers, such as glycerol triglycidyl ether, pentaerythritol tetraglycidyl ether, trimethylolpropane triglycidyl ether (TMPTGE) or trimethylol ethane triglycidyl ether (TMETGE), with trimethylol ethane triglycidyl ether being preferred. Mixtures of two or more of these reactive diluents can also be used, preferably mixtures containing triglycidyl ether, particularly preferably as a mixture of 1,4-butanediol diglycidyl ether (BDDGE) and trimethylolpropane triglycidyl ether (TMPTGE) or 1,4-butanediol diglycidyl ether (BDDGE) and trimethylolethane triglycidyl ether (TMETGE).

Overall, the reactive diluents are preferably present in an amount of >0 to 60% by weight, particularly 1 to 20% by weight, based on the total weight of the epoxy resin component (A).

The proportion of epoxy resin component (A) in the total weight of the multi-component resin system (i) is preferably from 5 to 90% by weight, in particular from 20 to 80% by weight or from 30 to 70% by weight, such as from 40 to 70% by weight.

Suitable epoxy resins and reactive thinners can also be found in the standard work by Michael Dornbusch, Ulrich Christ, and Rob Rasing, "Epoxy Resins," Vincentz Network GmbH & Co KG (2015), ISBN 13: 9783866308770. These compounds are incorporated herein by reference.

Further conceivable additives to the epoxy resin component (A) are thixotropic agents, such as optionally organically post-treated fumed silica, bentonites, alkyl and methyl celluloses and rhizinus oil derivatives, plasticizers such as phthalic or sebacic esters, stabilizers, antistatic agents, thickeners, flexibilizers, curing catalysts, rheological aids, wetting agents, colouring additives such as dyes or pigments, for example for different colouring of the components for better control of their mixing, as well as wetting agents, phlegmatizers, dispersants and other reaction rate control agents, or mixtures of two or more thereof.

Hardener component (B) of (i)

Hardener component (B) of the multi-component resin system (i) comprises at least one hardener, wherein the hardener comprises at least one compound commonly used for epoxy curing (reaction partner in polyaddition). The other additives of the hardener component of an epoxy-based luting mortar system according to the invention can be provided, for example, in a weight proportion totalling 0.01 to 70% by weight, e.g., 1 to 40% by weight, based on the hardener component (B).

The compounds commonly used for epoxy curing (acting as reactants in polyaddition) are in particular those having two or more groups selected from amino, imino, and mercapto, for example corresponding amines, thiols, or aminothiols, or mixtures thereof, for example as mentioned in Lee H and Neville K, "Handbook of Epoxy Resins" (New. York: McGraw-Hill), 1982.

According to the invention, one or more amines, preferably polyamines, may be used as reactive hardener components. Suitable amines for use in the curing agent are, in particular, those customary for epoxy-amine systems and known to those skilled in the art, selected from aliphatic, alicyclic and aromatic amines, the amine having on average at least two reactive hydrogen atoms bonded to a nitrogen atom per molecule. This includes polyamines having at least two amino groups in the molecule.

Suitable amines, without limiting the scope of the invention, include: 1,2-diaminoethane(ethylenediamine), 1,2-propanediamine, 1,3-propanediamine, 1,4-diaminobutane, 2,2-dimethyl-1, 3-propanediamine(neopentanediamine), diethylaminopropylamine (DEAPA), 2-methyl-1, 5-diaminopentane, 1,3-diaminopentane, 2,2,4- or 2,4,4-trimethyl-1, 6-diaminohexane and mixtures thereof (TMD), 1-Amino-3-aminomethyl-3, 5,5-trimethylcyclohexane, 1,3-bis(aminomethyl)

cyclohexane, 1,2-bis(aminomethyl)cyclohexane, hexamethylenediamine (HMD), 1, 2- and 1,4-diaminocyclohexane (1,2-DACH and 1,4-DACH), bis(4-aminocyclohexyl)methane, bis(4-amino-3-methylcyclohexyl)methane, diethylenetriamine (DETA), 4-Azaheptane-1, 7-diamine, 1,11-diamino-3, 6,9-trioxundecane, 1,8-diamino-3, 6-dioxaoctane, 1,5-diamino-methyl-3-azapentane, 1,10-diamino-4, 7-dioxadecane, bis(3-aminopropyl)amine, 1,13-diamino-4,7, 10-trioxatridecane, 4-aminomethyl-1, 8-diaminooctane, 2-butyl-2-ethyl-1, 5-diaminopentane, N, N-bis-(3-aminopropyl)methylamine, triethylenetetramine (TETA), tetraethylenepentamine (TEPA), pentaethylenehexamine (PEHA), bis(4-amino-3-methylcyclohexyl)methane, 1,3-benzenedimethanamine (m-xylylenediamine, mXDA), 1,4-benzenedimethanamine (p-xylylenediamine, pXDA), 5-(aminomethyl)bicyclo[[2.2.1]hept-2-yl]methylamine (NBDA, norbornandiamine), dimethyldipropylenetriamine, dimethylaminopropyl-aminopropylamine (DMAPAPA), 3-aminomethyl-3, 5,5-trimethylcyclohexylamine (isophoronediamine (IPD)), diaminodicyclohexylmethane (PACM), mixed polycyclic amines (MPCA) (e.g. E.g., Ancamine 2168), dimethyldiaminodicyclohexylmethane (Laromin® C260), 2,2-bis(4-aminocyclohexyl)propane.

Polyamines preferred according to the invention are 2-methylpentanediamine (DYTEK® A), 1-amino-3-aminomethyl-3, 5,5-trimethylcyclohexane (IPD), 1,3-benzenedimethanamine (m-xylylenediamine, mXDA), 1,4-benzenedimethanamine (p-xylylenediamine, PXDA), 1,6-diamino-2, 2,4-trimethylhexane (TMD), diethylenetriamine (DETA), triethylenetetramine (TETA), tetraethylenepentamine (TEPA), pentaethylenehexamine (PEHA), N-ethylaminopiperazine (N-EAP), 1,3-bisaminomethylcyclohexane (1,3-BAC), (3(4),8(9)bis(aminomethyl)dicyclo[5. 2.1. 02,6]decane (mixture of isomers, tricyclic primary amines; TCD diamine), 1,14-diamino-4, 11-dioxatetradecane, dipropylenetriamine, 2-methyl-1, 5-pentanediamine, N, N'-dicyclohexyl-1, 6-hexanediamine, N, N'-dimethyl-1, 3-diaminopropane, N, N'-diethyl-1, 3-diaminopropane, N, N-dimethyl-1, 3-diaminopropane, secondary polyoxypropylenediamines and triamines, 2,5-diamino-2, 5-dimethylhexane, bis(amino-methyl)tricyclopentadiene, 1,8-diamino-p-menthane, bis-(4-amino-3, 5-dimethylcyclohexyl)methane, 1,3-bis(aminomethyl)cyclohexane (1,3-BAC), dipentylamine, N-2-(aminoethyl)piperazine (N-AEP), N-3-(aminopropyl)piperazine, or piperazine.

The one or more epoxy-reactive amines are preferably present in hardener component (B) in an amount of 10 to 90 wt.-%, more preferably 35 to 60 wt.-%, based on the total weight of hardener component (B).

In addition to one or more amines, hardener component (B) according to the present invention may further contain a salt (S) as an accelerator. According to the invention, the salt (S) is at least one salt selected from the group consisting of salts of nitric acid, salts of nitrous acid, salts of halogens, salts of trifluoromethanesulfonic acid, and combinations thereof. Preferably, the salt (S) is at least one salt selected from the group consisting of salts of nitric acid, salts of halogens, salts of trifluoromethanesulfonic acid, as well as combinations thereof. It has been found to be particularly preferred that the salt (S) is selected from the group consisting of nitrates ($NO_3^-$), iodides ($I^-$), triflates ($CF_3SO_3^-$), as well as combinations thereof.

Suitable salts of nitric acid are in particular alkali metal nitrates, alkaline earth metal nitrates, lanthanoid nitrates, aluminum nitrate, ammonium nitrate as well as mixtures thereof. Corresponding salts of nitric acid are commercially available. Preferably, alkali metal nitrates and/or alkaline earth metal nitrates are used as salts of nitric acid, such as $Ca(NO_3)_2$ or $NaNO_3$. It is also possible to use as salt (S) a solution of a salt in nitric acid such as a solution containing $Ca(NO_3)_2/HNO_3$. To prepare this solution, $CaCO_3$ is dissolved in $HNO_3$.

Suitable salts of nitrous acid are in particular alkali metal nitrites, alkaline earth metal nitrites, lanthanoid nitrites, aluminum nitrite, ammonium nitrite and mixtures thereof. Corresponding salts of nitrous acid are commercially available. Preferably, alkali metal nitrites and/or alkaline earth metal nitrites are used as salts of nitrous acid, such as $Ca(NO_2)_2$.

Suitable salts of the halogens are in particular alkali metal halides, alkaline earth metal halides, lanthanide halides, aluminum halides, ammonium halides and mixtures thereof. Corresponding salts of the halogens are commercially available. Preferably, the halogens are selected from the group consisting of chloride, bromide, iodide as well as mixtures thereof, whereby iodides in particular are preferably used.

Suitable salts of trifluoromethanesulfonic acid are in particular alkali metal triflates, alkaline earth metal triflates, lanthanide triflates, aluminum triflate, ammonium triflate as well as mixtures thereof. Corresponding salts of trifluoromethanesulfonic acid are commercially available. Preferably, alkali metal nitrates and/or alkaline earth metal nitrates are used as salts of the trifluoromethanesulfonic acid, such as $Ca(CF_3SO_3)_2$.

In principle, the cations of the salt (S) can be organic, inorganic or a mixture thereof. Preferably, the cation of the salt (S) is an inorganic cation.

As organic cations, for example, ammonium cations substituted with organic radicals, such as tetraethylammonium cations substituted with $C_1$-$C_6$ alkyl radicals, can be considered.

Preferably, cations selected from the group consisting of alkali metals, alkaline earth metals, lanthanides, aluminum, ammonium ($NH_4^+$) as well as mixtures thereof, more preferably from the group consisting of alkali metals, alkaline earth metals, aluminum, ammonium as well as mixtures thereof and even more preferably from the group consisting of alkali metals, alkaline earth metals, aluminum as well as mixtures thereof are considered as inorganic cations of the salt (S). It is particularly preferred that the cation of salt (S) is selected from the group consisting of sodium, calcium, aluminum, ammonium, and mixtures thereof.

The salt (S) may be included in hardener component (B) in an amount of e.g., up to 12 wt.-%, such as up to 10 wt.-,

preferably up to 8 wt.-%, based on the total weight of hardener component (B).

Thus, the following compounds or components are particularly suitable as salt (S): $Ca(NO_3)_2$ (calcium nitrate, usually used as $Ca(NO_3)_2$ tetrahydrate), a mixture of $Ca(NO_3)_2/HNO_3$, $KNO_3$ (potassium nitrate), $NaNO_3$ (sodium nitrate), $Mg(NO_3)_2$ (magnesium nitrate, usually used as $Mg(NO_3)_2$ hexahydrate), $Al(NO_3)_3$ (aluminum nitrate, usually used as $Al(NO_3)_3$ nonahydrate), $NH_4NO_3$ (ammonium nitrate), $Ca(NO_2)_2$ (calcium nitrite), NaCl (sodium chloride), NaBr (sodium bromide), NaI (sodium iodide), $Ca(CF_3SO_3)_2$ (calcium triflate), $Mg(CF_3SO_3)_2$ (magnesium triflate), $Li(CF_3SO_3)_2$ (lithium triflate).

Hardener component (B) of the multi-component resin system (i) of the invention may comprise one or more salts (S). The salts may be used singly or in a mixture of two or more of the said salts.

To improve the solubility properties of the salt (S) in the hardener composition, it may be provided that the salt (S) is dissolved in a suitable solvent and used accordingly as a solution. Organic solvents such as methanol, ethanol and glycerol are suitable for this purpose. However, water can also be used as solvent, if necessary, also in mixture with the aforementioned organic solvents. To prepare the corresponding salt solutions, the salt (S) is added to the solvent and stirred, preferably until completely dissolved.

In addition, hardener component (B) of the multi-component resin system (i) according to the present invention may optionally include co-accelerators used in combination with the above salt (S).

Examples of suitable co-accelerators are in particular tris-2,4,6-dimethylaminomethylphenol, 2,4,6-tris(dimethylamino)phenol and bis[(dimethylamino)methyl]phenol. A suitable co-accelerator mixture contains 2,4,6-tris(dimethylaminomethyl)phenol and bis(dimethylaminomethyl)phenol. Mixtures of this kind are commercially available, for example as Ancamine® K54 (Evonik, Germany).

These co-accelerators are preferably contained in hardener component (B) in a weight proportion of from 0.001 to 5 wt.%, based on the total weight of the hardening hardener component (B).

As an alternative, the co-accelerator can be a phenol derivative. The phenol derivative is preferably selected from the group consisting of polyphenols from the group of novolac resins, styrenated phenols, phenolic lipids, and combinations thereof.

Compounds of the following formula (III) are preferably used as polyphenols from the group of novolac resins:

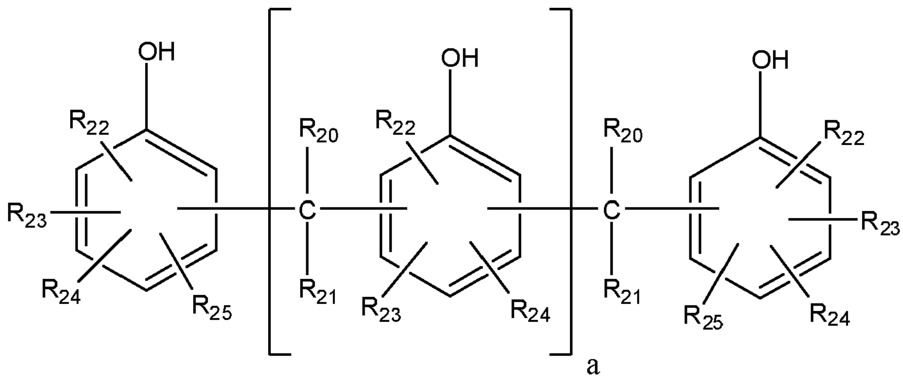

(III),

in which

$R_{20}$ and $R_{21}$ each denote, independently of one another, H or $-CH_3$;
$R_{22}$, $R_{23}$, $R_{24}$ and $R_{25}$ each denote, independently of one another, H, $-CH_3$ or an aliphatic functional group, preferably a linear, optionally partially unsaturated, unbranched hydrocarbon chain having up to 15 carbon atoms or an alkaryl functional group, preferably $-C_8H_9$; and where
a is 0 to 20, preferably 0 to 15.

The polyphenol from the group of novolac resins particularly preferably corresponds to the following formula (IV):

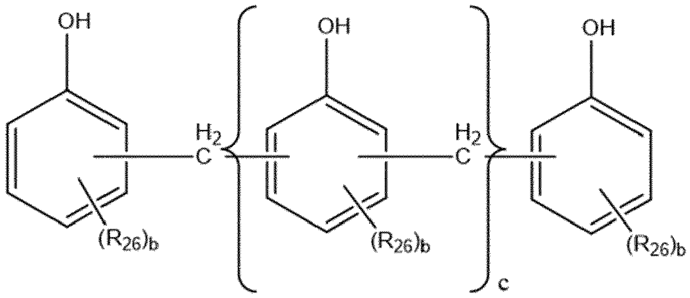

(IV)

in which

$R_{26}$ denotes a $C_1$-$C_{15}$ alkyl group, preferably a methyl group or tert.-butyl group;
b is 0, 1 or 2, and is preferably 1; and
c is 0 to 15, and is preferably 0 to 6.

The novolac resin very particularly preferably corresponds to the above formula (IV), in which $R_{26}$ denotes $CH_3$ and b is 1 or 2, or $R_{26}$ denotes tert.-butyl or a $C_1$-$C_{15}$ alkyl group and b is 1, and where c is 0 to 15, preferably 1 to 15.

The term styrenated phenols is understood to mean the electrophilic substitution products of phenols such as phenol, pyrocatechol, resorcinol, hydroquinone, hydroxyhydroquinone, phloroglucinol, pyrogallol, o-cresol, m-cresol or p-cresol with styrene or styrene analogs, such as vinyltoluene, vinylpyridine or divinylbenzene, in particular styrene. The styrenated phenol is particularly preferably selected from the reaction products of styrene and phenol which contain mixtures of compounds or individual compounds of the following formulae:

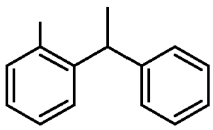 , 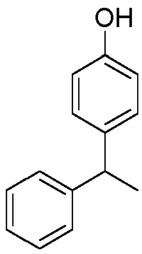 , 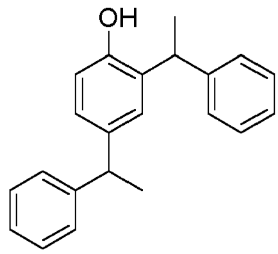 , 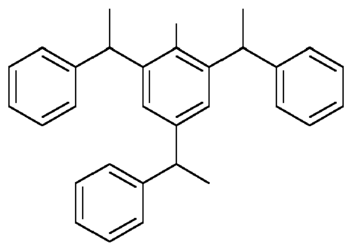

or 2,6-distyrylphenol, such as oligo- and polystyrene compound parts or compounds (products obtained from cationic polymerization of styrenes in phenols, oligomeric or polymeric products).

The term "*phenolic lipids*" is a collective term for a class of natural products that includes long aliphatic chains and phenolic rings. The phenolic lipid is preferably selected from alkyl catechols, alkyl phenols, alkyl resorcinols and anacardic acids. The at least one phenolic lipid is particularly preferably an alkylphenol selected from propylphenol, butylphenol, amylphenol, octylphenol, nonylphenol, dodecylphenol and cardanol-based compounds.

The hardener component (B) according to the multi-component resins system (i) of the invention can comprise one or more phenol derivatives. The phenol derivatives can be used both individually and in a mixture of two or more of the specified phenol derivatives. The hardener component (B) according to the invention preferably contains the phenol derivative in a proportion of from 4 to 25 wt.%, preferably from 10 to 20 wt.%, based on the total weight of the curing agent composition.

In a preferred embodiment, the phenol derivative is at least one polyphenol selected from the group of novolac resins and is combined with a salt (S) selected from the group of nitrates. The weight percent ratio of all phenol derivatives, in particular the polyphenols from the group of novolac resins, to all salts (S) in the hardener component (B) according to the invention is preferably 250:1 to 1:4, more preferably 40:1 to 1:2.

Alternatively, according to the invention, Mannich bases can be used as hardening agent in hardener component (B). Suitable Mannich bases are the reaction products of a selected amine and an aldehyde or aldehyde precursor with a phenolic compound selected from the group consisting of phenol or a styrolized phenol, pyrocatechol, resorcinol, styrolized resorcinol, hydroquinone, hydroxyhydroquinone, phloroglucin, pyrogallol, o-cresol, m-cresol, p-cresol, or bisphenols, such as bisphenol A or bisphenol F, and combinations thereof, preferably phenol or a styrolized phenol, styrolized resorcinol or bisphenol A.

The selected amine for preparing the Mannich base has a structure according to formula (I):

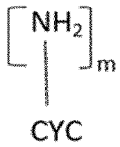

(I),

wherein "CYC" means a1) a monocyclic saturated ring having 3 to 12 ring atoms or a2) a bicyclic saturated ring system having 3 to 12 ring atoms per ring, the two rings of the bicyclic saturated ring system being linked to each other via an aliphatic group having 1, 2 or 3 carbon atoms and each of the two rings carrying at least one of the m [$NH_2$] groups, or a3) a fused di- or polycyclic saturated ring system having 6 to 12 ring atoms and
m is a positive integer greater than or equal to 2.

The selected amine can also be used in the form of one of its salts. In these cases, one or both hydrogen atoms of the m amino groups [-$NH_2$] are replaced by alkali and/or alkaline earth metals. The use of corresponding salts of the selected amines makes it possible to adjust the solubility properties of the selected amine.

The selected amines for the preparation of the Mannich base are characterized by having at least two $NH_2$ groups directly bonded to different ring atoms. Preferably, the selected amines have exactly two $NH_2$ groups directly bonded to different ring atoms. Accordingly, in a preferred embodiment, m is equal to 2.

The definitions of "CYC" described in variants a1), a2) and a3) may optionally be methyl- or dimethyl-substituted per ring in each case.

The definitions of "CYC" described in variants a1), a2) and a3) preferably have an aliphatic structure, i.e., the rings and, if appropriate, the linkage of two rings consist only of carbon and hydrogen atoms. However, it is also possible that the rings according to variants a1), a2) and a3) have heteroatoms.

In these cases, the ring in variant a1) or the ring system in variants a2) and a3) may have 0 to 3 nitrogen atoms, 0 to 3 oxygen atoms and 0 to 1 sulphur atoms.

Preferably, the number of ring atoms of the definitions of "CYC" described in variants a1), a2) and a3) 10 is 6 to 9, particularly preferably 6.

Particularly preferably, the selected amine is selected from the group consisting of 1,2-diaminocyclohexane, 1,4-diaminocyclohexane (1,2-DACH and 1,4-DACH), bis(4-aminocyclohexyl)methane (PACM), 4,4'-methylenebis(2-methyl-cyclohexyl-amine) (MACM), 3-aminomethyl-3,5,5-trimethylcyclohexylaminoe (IPDA), 5-(aminomethyl)bicyclo[[2.2.1]hept-2-yl]methylamin (NBDA) and methylcyclohexyldiamine (MCDA).

The selected amines may be used singly or in a mixture of two or more of said selected amines. The amine used for reacting with the aldehyde and the phenolic compound so as to form the Mannich base is preferably one of the above-mentioned amines which are reactive to epoxy groups, and preferably 1,3-benzenedimethanamine (mXDA), 3-amino-methyl-3,5,5-trimethylcyclohexane (IPDA), 1,3-bis(aminomethyl)cyclohexane (1,3-BAC), iaminodicyclohexyl methane (PACM), methylcyclohexyl diamine (mCDA) and 5-(aminomethyl)bicyclo[[2.2.1]hept-2-yl]methylamine (NBDA). The amine is preferably present in excess, such that the Mannich base has free amino groups.

The amine used for reacting with the aldehyde and the phenolic compound so as to form the Mannich base can also be an aminosilane selected from the group consisting of 3-aminoalkyltrialkoxysilanes, such as 3-aminopropyl-tri(m)ethoxysilane, 3-aminoalkylalkyl dialkoxysilane, such as 3-aminopropylmethyldi(m)ethoxysilane, N-(aminoalkyl)-3-aminoalkyltrialkoxysilanes, such as N-(2-aminoethyl)-3-aminopropyltri(m)ethoxysilane, N-(aminoalkyl)-3-aminoalkyl-alkyldialkoxysilanes such as N-(2-aminoethyl)-3-aminopropylmethyldi(m)ethoxysilane, 3-[2-(2-aminoethylamino)ethylamino]propyltri(m)ethoxysilane, bis-(gamma-trimethoxysilylpropyl)amine, or mixtures thereof; or also selected from the group consisting of N-cyclohexyl-3-aminopropyltri(m)ethoxysilane, N-cyclohexylaminomethylmethyldiethoxysilane, N-cyclohexylaminomethyltriethoxysilane, 3-ureidopropyltri(m)ethoxysilane, N-methyl[3-(trimethoxysilyl)-propylcarbamate, N-trimethoxysilylmethyl-O-methylcarbamate and N-dimethoxy(methyl)silylmethyl-O-methylcarbamate.

To form the Mannich base, a phenolic compound is reacted with at least one of the selected amines described above and an aldehyde or an aldehyde precursor that yields an aldehyde by decomposition. The aldehyde or aldehyde precursor can advantageously be added to the reaction mixture as an aqueous solution, in particular at an elevated temperature of about 50°C to 90°C and reacted with the selected amine as well as the phenolic compound.

As the phenolic compound, phenol or a styrolized phenol, pyrocatechol, resorcinol, styrolized resorcinol, hydroquinone, hydroxyhydroquinone, phloroglucin, pyrogallol, o-cresol, m-cresol, p-cresol, or bisphenols, such as bisphenol A or bisphenol F, and combinations thereof, particularly preferably phenol or a styrolized phenol, styrolized resorcinol or bisphenol A are used to form the Mannich base.

The aldehyde used to form the Mannich base is preferably an aliphatic aldehyde, particularly preferably formaldehyde. Preferably, trioxane or paraformaldehyde can be used as the aldehyde precursor, which decompose to formaldehyde by heating in the presence of water.

Preferably, the selected amine is present in excess during the reaction with the phenolic compound and the

aldehyde, so that the Mannich base has free amino groups.

In another embodiment, hardener component (B) of the multi-component resin system (i) according to the present invention may also comprise as the hardening agent mixtures of (i) styrenated phenols with (ii) amines. Amines usable in the mixture with styrenated phenols (which amines can be present as such or in salt form) include those mentioned above, especially N,N'-bis(3-amino-n-propyl)piperazine (BAPP), 1,3-bis(aminomethyl)cyclohexane (BAC), N-(2-aminoethyl)piperazine (AEP) or 3-aminomethyl-3,5,5-trimethylcyclohexylamine (isophoronediamine, IPDA), or other low molecular weight polyamines ("*polyamines*" also including diamines), especially oligomeric or monomeric aliphatic, cycloaliphatic, cycloheteroaliphatic, aromatic or araliphatic diamines, such as especially xylylenediamines, more especially m-xylylenediamine (1,3-bis(aminomethyl)benzene, MXDA); aliphatic polyamines, for example $C_1$-$C_{10}$alkane-di- or -polyamines, e.g. 1,2-diaminoethane, trimethylhexane-1,6-diamine, diethylenetriamine or triethylenetetraamine; oligomeric diamines of the formula $H_2N-(CH_2)_i-NH-[(CH_2)_jNH]_k-(CH_2)_l-NH_2$, wherein i, j and l are each independently of the others from 2 to 4 and k is 0, 1 or 2, especially "*triethylenetetramine*" (TETA, i.e. N,N'-bis(2-aminoethyl)ethylenediamine) or tetraethylenepentamine (TEPA); cycloaliphatic amines, such as 1,2-diaminocyclohexane or bis(aminomethyl)tricyclodecane (TCD) or bis(4-aminocyclohexyl)methane (PACM), or amine adducts; or mixtures of two or more thereof; especially mixtures of one or more araliphatic diamines, more especially m-xylylenediamine, with one or more other polyamines, especially BAC, or more especially one or more araliphatic diamines, especially m-xylylenediamine itself, or mixtures of BAC and m-xylylenediamine.

Styrenated phenols in accordance with this embodiment are the reaction products (electrophilic substitution products) of phenols (such as phenol, pyrocatechol, resorcinol, hydroquinone, hydroxyhydroquinone, phloroglucinol, pyrogallol, o-cresol, m-cresol or p-cresol, especially phenol) with styrene or styrene analogues, such as vinyltoluene, divinylbenzene or 4-vinylpyridine, especially with styrene, especially "*styrenated phenol*" itself (reaction product of styrene and phenol; CAS Reg. No. 61788-44-1), which, by way of example, can contain mixtures of compounds or individual compounds of the following formulae:

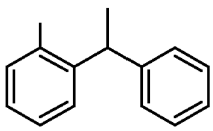,
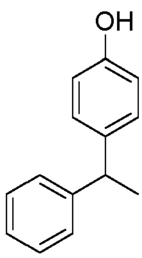,
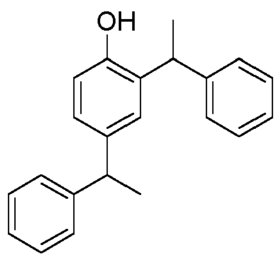,
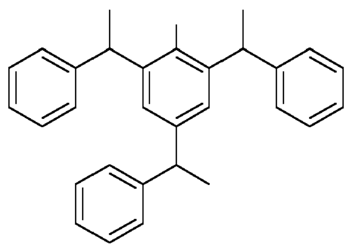

or 2,6-distyryl phenol, and also oligo- and poly-styrene portions or compounds (oligomeric or polymeric products obtained from cationic polymerisation of styrenes in phenols), for example of the formula

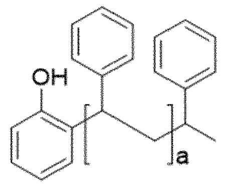

wherein a is 1 or a larger whole number, or branching products - in general, mixtures of a plurality of products formed during the reaction (including poly-substituted products) are obtained, so that the mentioned formulae are at most to be understood as being exemplary and are not necessarily - at least not in all cases - obtained as such.

Free radically curable vinylester system (ii)

In the following components (A) and (B) of a free-radically curable vinylester multicomponent resin system (ii) are described in detail.

Resin component (A) of (ii)

In the preferred embodiment of a multi-component resin system, the reactive resin component (A) comprises at least one radical-curable compound as the reactive resin. Suitable radically curable compounds are ethylenically unsaturated compounds, compounds with carbon-carbon triple bonds and thiol-Yn/En resins as known to the skilled

person.

Of these compounds, the group of ethylenically unsaturated compounds is preferred, which comprises styrene and derivatives thereof, (meth)acrylates, vinyl esters, unsaturated polyesters, vinyl ethers, allyl ethers, itaconates, dicyclopentadiene compounds and unsaturated fats, of which unsaturated polyester resins and vinyl ester resins are particularly suitable and are described, for example, in the applications EP 1 935 860 A1, DE 195 31 649 A1 and WO 10/108939 A1. Vinyl ester resins are most preferred due to their hydrolytic resistance and excellent mechanical properties.

Examples of suitable unsaturated polyesters are divided into the following categories:

(1) Ortho resins: these are based on phthalic anhydride, maleic anhydride or fumaric acid and glycols, such as 1,2-propylene glycol, ethylene glycol, diethylene glycol, triethylene glycol, 1,3-propylene glycol, dipropylene glycol, tripropylene glycol, neopentyl glycol or hydrogenated bisphenol-A;

(2) Iso-resins: these are produced from isophthalic acid, maleic anhydride or fumaric acid and glycols. These resins may contain higher proportions of reactive diluents than ortho resins;

(3) Bisphenol A fumarates: these are based on ethoxylated bisphenol A and fumaric acid;

(4) HET acid resins (hexachloro-endo-methylene-tetrahydrophthalic acid resins): are resins obtained from anhydrides or phenols containing chlorine/bromine in the production of unsaturated polyester resins.

In addition to these resin classes, a distinction can also be made between the so-called dicyclopentadiene resins (DCPD resins) as unsaturated polyester resins. The class of DCPD resins is obtained either by modification of one of the above-mentioned resin types by Diels-Alder reaction with cyclopentadiene, or alternatively they are obtained by a first reaction of a diacid, e.g., maleic acid, with dicyclopentadiene, and then by a second reaction, the usual production of an unsaturated polyester resin, whereby the latter is referred to as a DCPD maleate resin.

The unsaturated polyester resin preferably has a molecular weight Mn in the range from 500 to 10,000 Daltons, more preferably in the range from 500 to 5000 and even more preferably in the range from 750 to 4000 (according to ISO 13885-1). The unsaturated polyester resin has an acid value in the range from 0 to 80 mg KOH/g resin, preferably in the range from 5 to 70 mg KOH/g resin (according to ISO 2114-2000). If a DCPD resin is used as an unsaturated polyester resin, the acid value is preferably 0 to 50 mg KOH/g resin.

For the purposes of the invention, vinyl ester resins are oligomers or polymers with at least one (meth)acrylate end group, so-called (meth)acrylate-functionalized resins, which also include urethane (meth)acrylate resins and epoxy (meth)acrylates.

Vinyl ester resins which have unsaturated groups only in the terminal position are obtained, for example, by reacting epoxide oligomers or polymers (e.g., bisphenol A digylcidyl ether, phenol-novolac type epoxides or epoxide oligomers based on tetrabromobisphenol A) with, for example, (meth)acrylic acid or (meth)acrylamide. Preferred vinyl ester resins are (meth)acrylate-functionalized resins and resins obtained by reacting an epoxide oligomer or polymer with methacrylic acid or methacrylamide, preferably with methacrylic acid. Examples of such compounds are known from the applications US 3297745 A, US 3772404 A, US 4618658 A, GB 2217722 A1, DE 3744390 A1 and DE 4131457 A1. In this context, reference is made to application US 2011/071234.

The vinyl ester resin preferably has a molecular weight Mn in the range from 500 to 3000 daltons, more preferably 500 to 1500 daltons (according to ISO 13885-1). The vinyl ester resin has an acid value in the range from 0 to 50 mg KOH/g resin, preferably in the range from 0 to 30 mg KOH/g resin (according to ISO 2114-2000).

Particularly suitable vinyl ester resins are ethoxylated bisphenol A di(meth)acrylate with a degree of ethoxylation of 2 to 10, preferably 2 to 4, difunctional, trifunctional or higher-functional urethane (meth)acrylate oligomers or mixtures of these curable components.

Examples of such epoxy(meth)acrylates are those of formula (I)

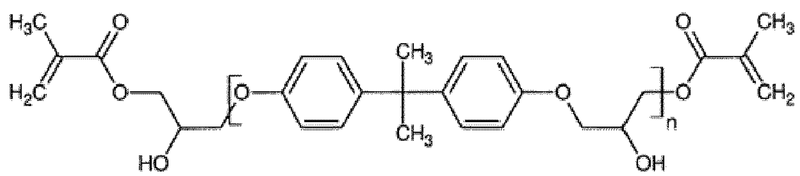

(I),

where n is a number greater than or equal to 1 (if mixtures of different molecules with different n-values are present and are represented by formula (I), non-integer numbers are also possible as mean values).

Further examples of the propoxylated or in particular ethoxylated aromatic diol, such as bisphenol A, bisphenol F or novolak (in particular di-)(meth)acrylates are those of formula (II)

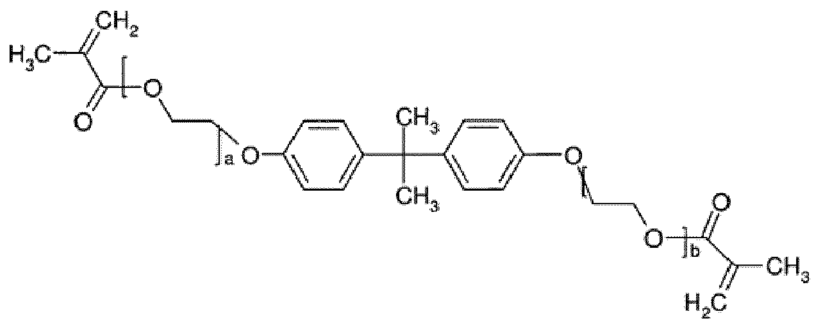

(II),

in which a and b each independently represent a number greater than or equal to 0, with the proviso that preferably at least one of the values is greater than 0, preferably both are 1 or greater (if mixtures of different molecules with different (a and b) values are present and are represented by formula (II), non-integer numbers are also possible as mean values).

Particularly suitable are the known reaction products of di- or polyisocyanates and hydroxyalkylmethyl acrylates, as described for example in DE 2 312 559 A1, adducts of (di)isocyanates and 2,2-propanebis-[3-(4-phenoxy)-1,2-hydroxypropane-1-methacrylate] according to USPS -3 629 187 and the adducts of isocyanates and methacryloyl alkyl ethers, -alkoxybenzenes and alkoxycycloalkanes as described in EP 44352 A1. -alkoxycycloalkanes, as described in EP 44352 A1. In this context, reference is made to DE 2312559 A1, DE 19902685 A1, EP 0684906 A1, DE 4111828 A1 and DE 19961342 A1. Of course, mixtures of suitable monomers can also be used.

All these resins, which can be preferably used according to the invention, can be modified according to methods known to the skilled person, for example to achieve lower acid numbers, hydroxide numbers or anhydride numbers, or can be made more flexible by introducing flexible units into the backbone, and the like.

In addition, the reactive resin may contain other reactive groups that can be polymerized with a radical initiator, such as peroxides, for example reactive groups derived from itaconic acid, citraconic acid and allylic groups and the like, as described for example in WO 2010/108939 A1 (itaconic acid esters).

The proportion of reactive resin in the reactive resin component is preferably from about 10 to about 70 % by weight, more preferably from about 20 to about 60 % by weight, even more preferably from about 25 to about 50 % by weight, based on the reactive resin component

The resin component (A) of multi-component resin system (ii) may contain suitable reactive diluents as described in the applications EP 1 935 860 A1 and DE 195 31 649 A1. Preferably, the resin component (A) contains a (meth)acrylic acid ester as reactive diluent, with aliphatic or aromatic C $C_{515}$- (meth)acrylates being particularly preferably -selected. Suitable examples include: 2-, 3-hydroxypropyl (meth)acrylate (HP(M)A), 1,3-propanediol di(meth)acrylate, 1,3-butanediol di(meth)acrylate, 1,4-butanediol di(meth)acrylate, trimethylolpropanetri(meth)acrylate, phenethyl(meth)acrylate, tetrahydrofurfuryl(meth)acrylate, *N*,*N-dimethylaminoethyl*(meth)acrylate, *N*,*N-dimethylaminomethyl*(meth)acrylate, acetoacetoxyethyl(meth)acrylate, isobornyl(meth)acrylate, 2-ethylhexyl(meth)acrylate, methoxypolyethylene glycol mono(meth)acrylate, trimethylcyclohexyl(meth)acrylate, 2-hydroxyethyl(meth)acrylate, dicyclopentenyloxyethyl(meth) acrylate and/or tricyclopentadienyldi(meth)acrylate, bisphenol-A-(meth)acrylate, novolakepoxidi(meth)acrylate, di-[(meth)acryloyl-maleoyl]-tricyclo-5.2.1.0.$^{2.6}$ -decane, dicyclopentenyloxyethyl crotonate, 3-(meth)acryloyl-oxymethyl-tricylo-5.2.1.0.$^{2.6}$-decane, 3-(meth)cyclopentadienyl (meth)acrylate, and decalyl 2-(meth)acrylate; glycerol formal (meth)acrylate; solketal (meth)acrylate, cyclohexyl (meth)acrylate, phenoxyethyl di(meth)acrylate, methoxyethyl (meth) acrylate, *tert*-butyl (meth)acrylate and norbornyl (meth)acrylate. Methacrylates are preferred over acrylates. Particularly preferred are 2- and 3-hydroxypropyl methacrylate (HPMA), 1,2-ethanediol dimethacrylate, 1,4-butanediol dimethacrylate (BDDMA), 1,3-butanediol dimethacrylate, trimethylolpropane trimethacrylate, acetoacetoxyethyl methacrylate, isobornyl methacrylate, bisphenol A methacrylate, trimethylcyclohexyl methacrylate, 2-hydroxyethyl methacrylate, PEG200 dimethacrylate and norbornyl methacrylate. Particularly preferred are 1,4-butanediol dimethacrylate and a mixture of 2- and 3-hydroxypropyl methacrylate (HPMA), or a mixture of these three methacrylates. The most preferred is a mixture of 2- and 3-hydroxypropyl methacrylate (HPMA). In principle, other conventional free-radically polymerizable compounds, alone or in a mixture with the (meth)acrylic acid esters, can also be used as reactive diluents, e.g., styrene, $\alpha$-methylstyrene-, alkylated styrenes such as *tert-butylstyrene*, divinylbenzene and vinyl and allyl compounds, whereby the non-labeled representatives thereof are preferred. Examples of such vinyl or allyl compounds are hydroxybutyl vinyl ether, ethylene glycol divinyl ether, 1,4-butanediol divinyl ether, trimethylolpropane divinyl ether, trimethylolpropane trivinyl ether, mono-, di-, tri-, tetra- and polyalkylene glycol vinyl ether, mono-, di-, tri-, tetra- and polyalkylene glycol allyl ether, adipic acid divinyl ester, trimethylolpropane diallyl ether and trimethylolpropane triallyl ether.

The reactive diluents are preferably present in the reactive resin in an amount of up to about 80 % by weight, particularly preferably from about 10 to about 60 -% by weight-, even more preferably from about 30 to about 60 % by weight, based on the resin component (A) of multi-component resin system (ii).

One or more inhibitors can be present in the resin component (A) according to the invention both to stabilize the reactive resin or the resin component (A) containing the reactive resin and to adjust the resin reactivity.

The inhibitors commonly used for free-radically polymerizable compounds, as known to the skilled person, are suitable for this purpose. Preferably, these inhibitors are selected from phenolic inhibitors and non-phenolic inhibitors, in particular phenothiazines.

Phenolic inhibitors are phenols such as 2-methoxyphenol, 4-methoxyphenol, 2,6-di-tert-butyl-4-methylphenol, 2,4-di-tert-butylphenol, 2,6-di-tert-butylphenol, 2,4,6-trimethylphenol, 2,4,6-tris(dimethylaminomethyl)phenol, 4,4'-thiobis(3-methyl-6-tert-butylphenol), 4,4'-isopropylidenediphenol, 6,6'-di-tert-butyl-4,4'-bis(2,6-di-tert-butylphenol), 1,3,5-trimethyl-2,4,6-tris(3,5-di-tert-butyl-4-hydroxybenzyl)benzene, 2,2'-methylene-di-p-cresol, catechols, such as pyrocatechol, and catechol derivatives, such as butyl pyrocatechols, such as 4-tert-butyl pyrocatechol and 4,6-di-tert-butyl pyrocatechol, hydroquinones, such as hydroquinone, 2-methylhydroquinone, 2-tert-butylhydroquinone, 2,5-di-tert-butylhydroquinone, 2,6-di-tert-butylhydroquinone, 2,6-dimethylhydroquinone, 2,3,5-trimethylhydroquinone, benzoquinone, 2,3,5,6-tetrachloro-1,4-benzoquinone, methylbenzoquinone, 2,6-dimethylbenzoquinone, naphthoquinone, or mixtures of two or more thereof, are suitable. These inhibitors are often part of commercial free-radical curing reactive resin components.

Preferred non-phenolic inhibitors are phenothiazines, such as phenothiazine and/or derivatives or combinations thereof, or stable organic radicals, such as galvinoxyl and N-*oxyl radicals,* in particular of the *piperidinyl-N-oxyl* or *tetrahydropyrrole-N-oxyl* type, such as *aluminum-N-nitrosophenylhydroxylamine*, diethylhydroxylamine, oximes such as acetaldoxime, acetone oxime, methyl ethyl ketoxime, salicyloxime, benzoxime, glyoxime, dimethylglyoxime, acetone-O-(benzyloxycarbonyl)oxime, TEMPOL, TEMPO and the like.

Furthermore, pyrimidinol or pyridinol compounds substituted in the para position to the hydroxyl group, as described in patent specification DE 10 2011 077 248 B1, can be used as inhibitors.

Stable *N-oxyl radicals such* as those described in DE 199 56 509 A1 and DE 195 31 649 A1 can be used, for example. Such stable nitroxyl radicals are of the type *piperidinyl-N-oxyl* or *tetrahydropyrrole-N-oxyl* or a mixture thereof.

Preferred stable nitroxyl radicals are selected from the group consisting of 1-oxyl-2,2,6,6-tetramethylpiperidine, 1-oxyl-2,2,6,6-tetramethylpiperidin-4-ol (also referred to as TEMPOL), 1-oxyl-2,2,6,6-tetramethylpiperidin-4-one (also referred to as TEMPON), 1-oxyl-2,2,6,6-tetramethyl-4-carboxyl-piperidine (also referred to as 4-carboxy-TEMPO), 1-oxyl-2,2,5,5-tetramethylpyrrolidine, 1-oxyl-2,2,5,5-tetramethyl-3-carboxylpyrrolidine (also referred to as 3-carboxy-PROXYL) and mixtures of two or more of these compounds, wherein 1-oxyl-2,2,6,6-tetramethylpiperidin-4-ol (TEMPOL) is particularly preferred.

Preferably, the inhibitor or inhibitors are selected from the group consisting of *N-oxyl radicals*, catechols, catechol derivatives and phenothiazines and a mixture of two or more thereof. Particularly preferred are the inhibitor(s) selected from the group consisting of tempol, catechols and phenothiazines. Particularly preferred are the inhibitors used in the examples, preferably in about the amounts indicated in the examples.

The inhibitors can be used either alone or as a combination of two or more of them, depending on the desired properties of the reactive resin. The combination of phenolic and non-phenolic inhibitors is preferred.

The inhibitor or the inhibitor mixture is added in amounts known in the art, preferably in an amount of from about 0.0005 to about 2% by weight (based on the reactive resin ultimately produced therewith), more preferably from about 0.01 to about 1% by weight (based on the reactive resin), even more preferably from about 0.05 to about 1% by weight (based on the reactive resin).

<u>Hardener component (B) of (ii)</u>

A hardener component (B) of the multi-component resin system (ii) containing a hardening agent is used to harden the radically curable compound of the preferred resin component (A) described above.

Preferably, a hardener system is used which comprises the hardening agent and an accelerator.

The accelerator can be added to the resin component (A).

The curing of the reactive resin can be initiated with a peroxide as initiator. Accordingly, in one embodiment, the hardener system contains

- at least one accelerator normally used for curing with peroxides and
- a peroxide as initiator.

All peroxides known to the skilled person that are used for curing epoxy (meth)acrylate resins can be used. Such peroxides include organic and inorganic peroxides, either liquid or solid, although hydrogen peroxide can also be used.

Examples of suitable peroxides include peroxycarbonates (of formula -OC(O)OO-), peroxy esters (of formula -C(O)OO-), diacyl peroxides (of formula -C(O)OOC(O)-), dialkyl peroxides (of formula -OO-), hydroperoxides (of formula -OOH) and the like. These may be present as oligomers or polymers. A comprehensive series of examples of suitable peroxides is described, for example, in application US 2002/0091214 A1, paragraph [0018].

Preferably, the peroxides are selected from the group of organic peroxides. Suitable organic peroxides are: tertiary alkyl hydroperoxides, such as tert-butyl hydroperoxide, and other hydroperoxides, such as cumenhydroperoxide, peroxy esters or peracids, such as tert-butyl peresters (e.g. tert-butyl peroxybenzoate), benzoyl peroxide, peracetates and perbenzoates, lactyl peroxybenzoate, benzoyl peroxide, peracetates and perbenzoates.tert-butyl peroxybenzoate), benzoyl peroxide, peracetates and perbenzoates, lauroyl peroxide, including (di)peroxy esters, perethers, such as peroxy diethyl ether, perketones, such as methyl ethyl ketone peroxide. The organic peroxides used as hardeners are often tertiary peresters or tertiary hydroperoxides, i.e., peroxide compounds with tertiary carbon atoms that are directly -bonded to an -O-O-acyl or -OOH group. However, mixtures of these peroxides with other peroxides can also be used according to the invention. The peroxides can also be mixed peroxides, i.e., peroxides which have two different peroxide-bearing units in one molecule. In a preferred embodiment, benzoyl peroxide (BPO) or tert-butyl peroxybenzoate is used for curing.

The peroxide can be used in its pure form or as a component of a mixture. Typically, it is used as a component of a mixture, in particular as a component of a hardener component (B) of multi-component resin system (ii), as described in more detail below. The hardener component used in the examples, or a hardener component with the same constituents, is particularly preferred.

The hardening agent is preferably contained in the hardener component (B) in an amount of less than 3% by weight based on the total weight of the hardener component (B). Particularly preferably, the hardening agent is a peroxide and is contained in the hardener component (B) in an amount of less than 3% by weight relative to the total weight of the hardener component (B), and very particularly preferably, the peroxide is a dibenzoyl peroxide and is contained in the hardener component (B) in an amount of less than 3% by weight relative to the total weight of the hardener component (B). As a result, less hazardous substance labeling can be achieved or, ideally, hazardous substance labeling is no longer required.

The use of organically substituted ammonium persulphates (for example N'N'N'N'-tetrabutylammonium or N'N'N'-tricapryl-N'-methylammonium persulphate) is also possible.

In addition to the peroxide, the hardener system can also contain a phlegmatizing agent to stabilize the peroxide. Corresponding phlegmatizing agents are known from DE 3226602 A1, EP 0432087 A1, and EP 1 371 671 A1.

Such a hardener system preferably contains water as a phlegmatizing agent. In addition to water, the hardener system may also contain other phlegmatizing agents, whereby water is preferred as the sole phlegmatizing agent in order to avoid introducing compounds that have a plasticizing effect.

Preferably, the peroxide is present together with the water as a suspension. Corresponding suspensions are commercially available in different concentrations, such as the aqueous dibenzoyl peroxide suspensions from United Initiators (e.g., BP40SAQ), Perkadox 40L-W (Nouryon), Luperox® EZ-FLO (Arkema), Peroxan BP40W (Pergan).

The peroxide can be contained in the hardener component in an amount of 0.25 to 35 wt.%, preferably 1 to 30 wt.%, particularly preferably 5 to 25 wt.%, based on the hardener component.

In the hardener system described, an accelerator is used in addition to the peroxide. This accelerates the curing reaction. This accelerator is added to the reactive resin component in order to store it spatially separated from the peroxide and thus prevent its premature decomposition.

Suitable accelerators are known to the skilled person. These are suitably amines.

Suitable amines are selected from the following compounds, which are described, for example, in the application US 2011071234 A1: Dimethylamine, trimethylamine, ethylamine, diethylamine, triethylamine, n-propylamine, di-n-propylamine, tri-n-propylamine, isopropylamine, diisopropylamine, triisopropylamine, n-butylamine, isobutylamine, tert-butylamine, di-n-butylamine, diisobutylamine, tri-isobutylamine, pentylamine, isopentylamine, diisopentylamine, hexylamine, octylamine, dodecylamine, laurylamine, stearylamine, aminoethanol, diethanolamine, triethanolamine, aminohexanol, ethoxyaminoethane, dimethyl(2-chloroethyl)amine, 2-ethylhexylamine, bis(2-chloroethyl)amine, 2-ethylhexylamine, bis(2-ethylhexyl)amine, N-methylstearylamine, dialkylamines, ethylenediamine, N,N'-dimethylethylenediamine, tetramethylethylenediamine, diethylenetriamine, permethyldiethylenetriamine, triethylenetetramine, tetraethylenepentamine, 1,2-diaminopropane, di-propylenetriamine, tripropylenetetramine, 1,4-diaminobutane, 1,6-diaminohexane, 4-amino-1-diethylaminopentane, 2,5-diamino-2,5-dimethylhexane, trimethylhexamethylenediamine, N,N-dimethylaminoethanol, 2-(2-diethylaminoethoxy)ethanol, bis(2-hydroxyethyl)oleylamine, tris-[2-(2-hydroxy-ethoxy)-ethyl]amine, 3-amino-1-propanol, methyl(3-aminopropyl)ether, ethyl-(3-aminopropyl)ether, 1,4-butanediol-bis(3-aminopropyl)ether, 3-dimethylamino-1-propanol, 1-amino-2-propanol, 1-diethylamino-2-propanol, diisopropanolamine, methyl-bis(2-hydroxypropyl)amine, tris(2-hydroxypropyl)amine, 4-amino-2-butanol, 2-amino-2-methylpropanol, 2-amino-2-methylpropanediol, 2-amino-2-hydroxymethylpropanediol, 5-diethylamino-2-pentanone, 3-methylaminopropionitrile, 6-aminohexanoic acid, 11-aminoundecanoic acid, 6-aminohexanoic acid ethyl ester, 11-aminohexanoic acid isopropyl ester, cyclohexylamine, N-methylcyclohexylamine, N,N-dimethylcyclohexylamine, dicyclohexylamine, N-ethylcyclohexylamine, N-(2-hydroxyethyl)-cyclohexylamine, N,N-bis-(2-hydroxyethyl)-cyclohexylamine, N-(3-aminopropyl)-cyclohexylamine, aminomethylcyclohexane, hexahydrotoluidine, hexahydrobenzylamine, aniline, N-methylaniline, N,N-dimethylaniline, N,N-diethylaniline, N,N-di-propylaniline, iso-butylaniline, toluidine, diphenylamine, Hydroxyethylaniline, bis(hydroxyethyl)aniline, chloroaniline, aminophenols, aminobenzoic acids and their esters, benzylamine, dibenzylamine, tribenzylamine, methyldibenzylamine, $\alpha$-phenylethylamine, xylidine, diisopropylaniline, dodecylaniline, aminonaphthalene, N-methylaminonaphthalene, N,N-dimethylaminonaphthalene, N,N-dibenzylnaphthalene, diaminocyclohexane, 4,4'-diamino-dicyclohexylmethane, diamino-dimethyl-dicyclohexylmethane, phenylenediamine, xylylenediamine, diaminobiphenyl, naphthalenediamines, benzidines, 2,2-bis-(aminophenyl)-propane, aminoanisoles, amino-thiophenols, aminodiphenyl ethers, aminocresols, morpholine, N-methylmorpholine, N-phenylmorpholine, hydroxyethylmorpholine, N-methylpyrrolidine, pyrrolidine, piperidine, hydroxyethylpiperidine, pyrroles, pyridines, quinolines, indoles, indolenines, carbazoles, pyrazoles, imidazoles, thiazoles, pyrimidines, quinoxalines, aminomorpholine, dimorpholinethane, [2,2,2]-diazabicyclooctane and N,N-dimethyl-p-toluidine.

Preferred amines are symmetrically or asymmetrically substituted aniline and toluidine derivatives and N,N-bis(hydroxy)alkylarylamines, such as N,N,-dimethylaniline, N,N-diethylaniline, N,N-dimethyl-p-toluidine, N,N-bis(hydroxyalkyl)arylamines, N,N-bis(2-hydroxyethyl)anilines, N,N-bis(2-hydroxyethyl)toluidine, N,N-bis(2-hydroxypropyl)aniline, N,N-bis(2-hydroxypropyl)toluidine, N,N-bis(3-methacryloyl-2-hydroxypropyl)-p-toluidine, N,N-dibutoxyhydroxypropyl-p-toluidine, N-methyl-N-hydroxyethyl-p-toluidine, N-ethyl-N-hydroxyethyl-p-toluidine as well as the analogous o- or m-toluidines and 4,4'-bis(dimethylamino)diphenylmethane and/or the leuco forms of the dyes crystal violet or malachite green.

Polymeric amines, such as those obtained by polycondensation of N,N-bis(hydroxyalkyl)aniline with dicarboxylic acids or by polyaddition of ethylene oxide and these amines, are also suitable as accelerators.

Preferred accelerators are N,N-bis(2-hydroxypropyl)toluidine, N,N-bis(2-hydroxyethyl)toluidine and para-toluidine ethoxylate (Bisomer® PTE).

In this preferred embodiment, the accelerator can be contained in the reactive resin component in an amount of 0.01 to 10% by weight, preferably 0.1 to 5% by weight, particularly preferably 0.1 to 3% by weight, based on the resin component.

Alternatively, a hardener system can be used for hardening which is peroxide-free and contains the components

- at least one manganese compound as an accelerator and
- a 1,3-dioxo compound as initiator

is included. Reference is made to DE 10 2011 078 785 A1.

Suitable 1,3-dioxo compounds are compounds of the general formula (III)

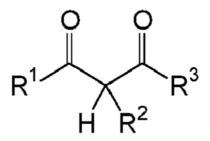

(III),

in the

$R^1$ and $R^3$ are each independently of one another an unbranched or branched, optionally substituted C -$C_{14}$ alkyl group or a C -C alkoxy group, $_{14}$

$R^2$ is an unbranched or branched, optionally substituted C -$C_{14}$ alkyl group or a C -$C_{14}$ alkoxy group, or together with $R^1$ or $R^3$ forms an optionally substituted five- or six-membered aliphatic ring which optionally comprises heteroatoms in or on the ring.

In this hardener system, it is essential that in the compound of formula (III) the carbon atom connecting the two carbonyl groups has exactly one hydrogen atom bonded to this carbon atom.

Preferably, the compound of the general formula (III) is a compound of the formula (IV)

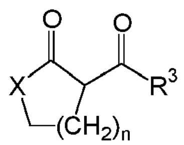

(IV),

in which independently X = C, O, n = 1, 2 and $R^3$ is an unbranched or branched, optionally substituted C -$C_{14}$ alkyl group or a C -$C_{14}$ alkoxy group. X is more preferably O. n is more preferably 1. $R^3$ is more preferably a C -$C_{14}$ alkyl group.

Particularly preferred is the compound of formula (III) 2-methyl-2,4-pentanedione, -DAcetylbutyrolacton, cyclopentanone-2-carboxylic acid methyl ester or cyclopentanone-2-carboxylic acid methyl ester, where -DAcetylbutyrolacton is most preferred.

A manganese compound, in particular a manganese salt or a manganese complex, is used as the accelerator. Mixtures of manganese salts and/or manganese complexes can also be used.

Manganese salts or manganese complexes, in particular based on 1,3-dioxo compounds such as acetylacetonate (petane-2,4-dione) and carboxylic acids such as naphthenates, octoates, ethylhexanoates or saturated fatty acids, have proven to be particularly suitable. There are no restrictions with regard to the manganese compound. The manganese compound is conveniently soluble in non-polar solvents. Mn(II) octoate is particularly suitable.

Alternatively, a hardener system can also be used for hardening, which contains the components:

- at least one metal salt as accelerator and
- at least one compound containing thiol and/or thiol ester groups as initiator,

includes.

By combining or mixing the two components, radicals can be formed which can trigger the polymerization of non-aromatic double bonds, e.g., olefinic double bonds, such as acrylates or methacrylates, instead of conventional radical formers.

Examples of thiols are thioglycerol, methyl-, ethylmercaptan and higher homologs e.g. dodecylmercaptan; dimercaptans, such as dimercaptopropane sulphonic acid, dimercaptosuccinic acid, dithiothreitol; poly(ethylene glycol) dithiols, of the general formula HS-[CH -$CH_{22}$ -O] -CH -$CH_{n22}$ -SH, in which n is a number between 0 and 10; liquid polysulphide polymers with thiol end groups, e.g. Thioplast G types from Akzo Nobel; polymercaptan hardeners from the company Akzo Nobel.e.g. Thioplast G types from Akzo Nobel; polymer captan hardeners and crosslinkers e.g. SIQ-Amin 999 from S.I.Q.-Kunstharze GmbH; ethoxylated and/or propoxylated alcohols from mono-, di-, tri-, tetra-, pentaols and/or other polyols with thiol end groups, e.g. Capcure 3-800 from Cognis, or the compounds mentioned below as particularly suitable thiols. The octanthiolate S-[3(triethoxysilyl)propyl]ester is mentioned here as a particularly suitable thiol ester. Examples of particularly suitable thiols are glycol di(3-mercaptopropionate), trimethylolpropane tri(3-mercaptopropionate), pentaerythritol tetra(3-mercaptopropionate), dipentaerythritol hexa-3-mercaptopropionate, ethoxylated trimethylolpropane tris(3-mercaptopropionate) with different degrees of ethoxylation (e.g., ETTMP 700 and ETTMP 700).e.g., ETTMP 700 and ETTMP 1300 from Bruno Bock), tris[2-(3-mercaptopropionyloxy)ethyl]isocyanurate, 3-mercaptopropyltrimethoxysilane.

As a further alternative, a hardener system containing the following components can be used for hardening:

- at least one metal salt as accelerator and
- as initiator at least one CH-acidic compound of the formula (V)

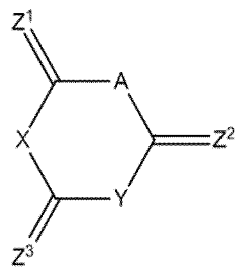

(V),

wherein

(i)

-A- stands for -C($R^1$ )($R^2$ )-,
-X- stands for a bond, for -$NR^3$ - or for -(CR R $)^{45}_{p}$ -, or for -O-, Y stands for $NR^6$ or for (CR R $)^{78}_{q}$ , or for O, where if X stands for O, Y also stands for O;
where X is preferably (CR R $)^{45}_{p}$ and Y is CR $R^{78}$ ,
or X stands for $NR^3$ and Y for $NR^6$;
$Z^1$ stands for O, S, S=O or $S(=O)_2$ ,

$Z^2$ stands for O, S, S=O or $S(=O)_2$ ,
$Z^3$ stands for O, S, S=O or $S(=O)_2$ or for $R^9$ and $R^{10}$ ,
p stands for 1, 2 or 3, preferably for 1 or 2
q stands for 1, 2 or 3, preferably for 1;
and the radicals $R^1$ , $R^2$ , $R^3$ , $R^4$ , $R^5$ , $R^6$ , $R^7$ , $R^8$ , $R^9$ and $R^{10}$ independently of one another represent hydrogen, alkyl, aryl, aralkyl, cycloalkyl or cycloalkylalkyl and are each unsubstituted or substituted and/or heteroatoms (instead of C atoms);
preferably selected from O, N, such as NH or N-alkyl, and S, with the proviso that at least one of the radicals $R^1$ and $R^2$ is hydrogen,

or
(ii) open-chain compounds,

in which the link forming the bridge $-C(=Z^3)-$ is missing,

-A- stands for $-C(R^1)(R^2)-$, X and Y independently of one another stand for a respectively unbranched or branched, unsubstituted or substituted, optionally heteroatoms (instead of C atoms; in particular selected from O, N, such as NH or N-alkyl, and S), C $-C_{14}$ -alkyl group or C $-C_{14}$ -alkoxy group or preferably an unsubstituted or substituted C $-C_{14}$ -alkoxycarbonylmethyl group or C $-C_{14}$ - alkylcarbonylmethyl group, in each case optionally containing heteroatoms (instead of C atoms; in particular selected from O, N, such as NH or N-alkyl, and S),
$R^1$ and $R^2$ are both hydrogen and
$Z^1$ and $Z^2$ have the above meanings;
or X represents a C $-C_{14}$ -alkyl group or C $-C_{14}$ -alkoxy group or C $-C_{14}$ - alkoxycarbonylmethyl group or C $-C_{14}$ -alkylcarbonylmethyl group, each of which is unbranched or branched, unsubstituted or substituted and optionally has heteroatoms (instead of C atoms; in particular selected from O, N, such as NH or N-alkyl, and S),
Y and $Z^2$ together with the binding carbon atom mean -CN,
$Z^1$ has the above meanings, and
$R^1$ and $R^2$ are each defined as above, with the proviso that at least one of the radicals is hydrogen;
and/or salts thereof.

Preferred examples of such compounds are 2,4,6-pyrimidine trione derivatives are barbituric acid (2,4,6-pyrimidine trione) itself, 1-benzyl-5-phenylbarbituric acid (1-(phenylmethyl)-5-phenyl-2,4,6-pyrimidine trione), 5-butylbarbituric acid (5-butyl-2,4,6-pyrimidine trione), 1-cyclohexyl-5-ethylbarbituric acid (1-cyclohexyl-5-ethyl-2,4,6-pyrimidintron) or 2-thiobarbituric acid (4,6-dihydroxy-2-mercaptopyrimidine), 1,3-cyclohexanedione, 2-methyl-1,3-cyclohexanedione, 1,3-cyclopentanedione, 2-methyl-1,3-cyclopentanedione, 4,4-dimethyl-1,3-cyclohexanedione, 5,5-dimethyl-1,3-cyclohexanedione (dimedone), 2,2-dimethyl-1,3- dioxane-4,6-dione or 2,2,5-trimethyl-1,3-dioxane-4,6-dione, 3-oxoglutaric acid dimethyl ester, and/or diethyl 1,3-acetone dicarboxylate, ethyl cyanoacetate, methyl cyanoacetate or 2-ethylhexyl cyanoacetate, or 1,3-dioxo compounds mentioned in DE 10 2011 078 785.

In both cases, the components used as accelerators in the form of a metal salt, which also includes metal complexes and metal oxides, are preferably one or more metal salts or, in particular, salts of organic and/or inorganic acids with metals, e.g. selected from cobalt, zirconium, zinc, cerium, tin, bismuth or preferably vanadium, manganese, copper or iron, or mixtures of two or more thereof.e.g. selected from cobalt, zirconium, zinc, cerium, tin, bismuth or preferably vanadium, manganese, copper or iron, or mixtures of two or more thereof, wherein the organic acids are preferably saturated, wherein vanadium and iron or in particular manganese and copper, optionally in the presence of one or two co-accelerators with a metal content from the group of the above-mentioned metals, is preferred, in particular in the form of salts or complexes with inorganic acids and/or carboxylate radicals, such as carboxylates with $CH_3$ , $C_2$ $-C_{20}$ -alkyl, a $C_6$ $-C_{24}$ -aryl radical or $C_7$ $-C_{30}$ -aralkyl radical, for example octoate, e.g. 2-ethylhexylhexyl, C -C -aralkyl, or C - C -aralkyl.e.g. 2-ethylhexanoate (isooctanoate), also neodecanoate, or acetylacetonate. Particularly preferred are manganese carbonate or carboxylates, such as Mn-acetate or Mn-octoate, copper carboxylates, such as copper octoate or copper naphthenate, copper quinolates, iron carboxylates, such as iron octoate and/or vanadium carboxylates and/or the group of metal salts with inorganic acids, which comprises, for example, iron chloride, iron sulphate and copper chloride.

In a further alternative, a hardener system can be used for hardening, which contains the following components

- at least one metal salt as accelerator and
- as initiator at least one aldehyde and/or ketone and at least one primary amine, and/or
- b2) at least one imine which contains one or more imine structural increments of the formula (VI):

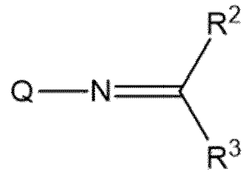

(VI),

wherein independently of each other:

Q represents the organic residue of the amine used (in each case), or represents hydrogen; and
$R^2$ and $R^3$ independently of one another denote hydrogen and/or an unsubstituted or substituted, optionally having double bonds and/or heteroatoms, mono- or polybranched or straight-chain organic radical which contains at least one aliphatic, heteroaliphatic, alicyclic or heterocyclic molecular structure, or a combination of two or more of the abovementioned molecular structures;

and/or salts thereof,

includes.

Preferably, the molecular weight of the imines containing imine structural increments of formula (VI) is 2000 daltons (g/mol) or lower, for example 1000 daltons or lower. The aldehydes and/or ketones also preferably have molecular weights in these ranges.

This hardener system can be present as a finished hardener composition (for example with microencapsulated components a) and b)) or preferably only be formed during mixing with other components of a synthetic resin composition (as a composition (mixture), so to speak), for example during use.

The aldehydes, ketones, amines, aldimines or ketimines contained or used are known or can be produced/obtained by known processes or are preferably obtained thereafter. The imines can be synthesized or obtained before use (e.g., for attaching anchoring elements) or only "in situ". Possible methods according to the invention are thus (t) separate prior preparation and/or (tt) "in situ" preparation, in which the aldehyde/ketone and the primary amine are divided between different components of the anchoring system and are mixed, for example, at the site of application and/or (ttt) "in situ" preparation in a component of the anchoring system, in which the aldehyde/ketone and the primary amine are mixed together during the preparation of the respective component. In particular, the imines according to (t) are obtained by condensation with elimination of water from one or more amines with one or more aldehydes or ketones. Corresponding reaction conditions for the separate prior reaction (t) are known to the person skilled in the art.

Examples of suitable amines and aldehydes or ketones can be found in particular in DE 10 2004 035 542 A1, EP 1 329 469 A1, EP 1 975 190 A1 and EP 2 017 260.

The primary amines added as such or suitable for synthesizing the imines comprise, for example, mono-, di- or polyamines, or mixtures of two or more thereof. The mono-, di- and/or polyamines that can be used can be either linear or branched. The molecular skeleton of the mono- and/or di- and/or polyamines may comprise aliphatic, heteroaliphatic, alicyclic, heterocyclic, aromatic, aliphatic-aromatic and silane/siloxane molecular structures or two or more independently selected ones thereof. Primary and/or secondary and tertiary amino groups may be present in the molecule, but at least one primary amino group (-NH2) must be present to form the aldimine or ketimine.

The mono-, di- or polyamines are preferably from the group of alkyl or alkylene (mono or di)amines (such as e.g.2-methylpentanediamine, or 2,2,4- or 2,4,4-trimethylhexamethylenediamine), heteroalkyl or heteroalkylene(mono or di) amines (such as 1,13-diamino-4,7,10-trioxatridecane, commercially available amine-functionalized polyoxyalkylenes [Jeffamines] from Huntsman Corp, or e.g. triethylenetetramine and/or higher homologues): Triethylenetetramine and/or higher homologs), the cycloalkyl or cycloalkylene(mono or di)amines (such as: isophorone diamine, 1,3-bisaminomethylcyclohexane, TCD diamine), the heterocyloalkyl or heterocycloalkylene(mono or di)amines (such as.aminoethylpiperazine), the aminols or aminoalcohols (such as 1,3-diaminopropan-2-ol), and the aliphatic-aromatic (mono or di)amines (such as 1,3- or 1,4-benzenedimethanamine), selected and/or from the group of aminosilanized fillers.

Furthermore, the mono-, di- or polyamines from the group of aminoamides, polyaminoamides, Mannich bases and the amine adducts (epoxide-amine adducts as described, for example, in EP 0 387 418 A2, isocyanate-amine adducts [for example from unreacted amino groups of the imine synthesis or from the above-mentioned aminols - when using the aminols, the conversion to the imine is preferably carried out first and then the addition to the isocyanate], Bucherer adducts and Michael addition adducts).

Aminoalkylsilanes, which contain at least one hydrolyzable group such as alkoxy, e.g., methoxy, or ethoxy - bound to silicon - are also of particular interest as amines. These can hydrolyze and condense (through the resulting reaction water or added water) and thus form oligomers that carry several amino groups and meet the REACH definition for polymers. Imines of such aminoalkylsilanes therefore form the basis for particularly preferred embodiments of the

invention. Preferred such aminoalkylsilanes are, for example, selected from the group comprising one or more of the following compounds: Aminoalkyltri- or -dialkoxysilanes, such as 3-aminopropyl-trimethoxysilane or 3-aminopropyl-triethoxysilane, and N-(aminoalkyl)amino-alkyltri- or -dialkoxysilanes, such as N-(2-aminoethyl)-3-aminopropyltrimethoxysilane or N-(2-aminoethyl)-3-aminopropylmethyldimethoxysilane, and ureidoalkyltrimethoxysilanes such as 3-ureidopropyltrimethoxysilane.

In a further particular embodiment of the objects of the invention, aminosilanized fillers which carry primary amino groups, such as aminosilane-treated quartz powder (e.g., Silbond AST(R) from Quarzwerke GmbH), aminosilane-treated silica (e.g., Aktisil AM(R) from Hoffmann Mineral), or aminosilane-treated fumed silicas, can be provided and included as polyamines.

The aldehydes and ketones added as such or usable or suitable for synthesizing the aldimines and/or ketimines are in particular those of the formula (VII)

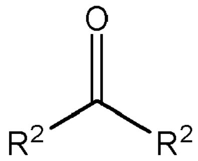 (VII),

where:

$R^2$, $R^3$ independently of one another denote hydrogen and/or an unsubstituted or substituted and/or a mono- or polybranched or straight-chain organic radical which optionally has double bonds and/or heteroatoms and which can comprise aliphatic, heteroaliphatic, alicyclic, heterocyclic molecular structures and/or combinations of the aforementioned molecular structures.

Preferably, the aldehydes and/or ketones are compounds which have at least one or more (primary and/or secondary) hydrogen atoms on the alpha-carbon atom which is adjacent to the carbonyl group. Examples of such aldehydes are propanal, valeraldehyde, isovaleraldehyde, or methoxyacetaldehyde, or 3,7-dimethyl-6-octenal (citronellal) or 3,7-dimethyl-7-hydroxyoctanal (hydroxycitronellal). Examples of such ketones are methyl isobutyl ketone, acetone, or methyl ethyl ketone or 6-methyl-5-hepten-2-one.

It is particularly preferred that the aldehydes and/or ketones are compounds which have a double bond and/or branching at the alpha-carbon atom in relation to the carbonyl group. As a result, the particularly preferred aldehydes and/or ketones have only one (tertiary) hydrogen atom on the alpha carbon atom facing the carbonyl group. Examples of particularly preferred aldehydes are isobutyraldehyde, 2-ethylhexanal, 2-methylbutanal, 2-ethylbutanal, 2-methylvaleraldehyde, 2,3-dimethylvaleraldehyde, cyclohexylcarboxaldehyde, or 3,7-dimethyl-2,6-octadienal (citral), 3-(4-tert-butylphenyl)-2-methylpropanal (Lilial, Lysmeral), tetrahydrofuran-3-carboxaldehyde, tetrahydro-2-furancarboxaldehyde, 4-formyltetrahydropyran, tetrahydro-2H-pyran-2-carbaldehyde or tetrahydro-pyran-3-carbaldehyde. Examples of particularly preferred ketones are diisopropylketone, 3-methyl-2-pentanone, 2-methylcyclohexanone or beta-ionones.

The foregoing examples of suitable amines, preferred and particularly preferred aldehydes and/or ketones are not intended to limit the scope of suitable amines, aldehydes and/or ketones, but merely to illustrate some example compounds having the structural features defined above as suitable, preferred and particularly preferred.

Particularly preferred are also the aldehydes, ketones or synthesized aldimines and/or ketimines mentioned in the examples and the specific amines, ketones and aldehydes added as such and/or used to synthesize the aldimines and/or ketimines, or mixtures of two or more thereof.

Isocyanate-Amine-System (iii)

In the following components (A) and (B) of an isocyanate-amine-multicomponent resin system (i) are described in detail.

Resin component (A) of (iii)

The resin component (A) comprises at least one polyisocyanate. All aliphatic and/or aromatic isocyanates known to a person skilled in the art and having an average NCO functionality of 2 or more, individually or in any mixtures with one another, can be used as the polyisocyanate. The average NCO functionality indicates how many NCO groups are present in the polyisocyanate. Polyisocyanate means that two or more NCO groups are contained in the compound.

Suitable aromatic polyisocyanates are those having aromatically bound isocyanate groups, such as diisocyanatobenzenes, toluene diisocyanates, diphenyl diisocyanates, diphenylmethane diisocyanates, diisocyanatonaphthalenes, triphenylmethane triisocyanates, but also those having isocyanate groups that are bound to an aromatic group via

an alkylene group, such as a methylene group, such as bis- and tris (isocyanatoalkyl) benzenes, toluenes and xylenes.

Preferred examples of aromatic polyisocyanates are: 1,3-phenylene diisocyanate, 1,4 phenylene diisocyanate, 2,4-toluylene diisocyanate, 2,5-toluylene diisocyanate, 2,6-toluylene diisocyanate, 1,3-xylylene diisocyanate, 1,4-xylylene diisocyanate, tetramethyl-1,3-xylylene diisocyanate, tetramethyl-1,4-xylylene diisocyanate, 1,3 bis(isocyanatomethyl)benzene, 1,4-bis(isocyanatomethyl)benzene, ethylphenyl diisocyanate, 2-dodecyl-1,3-phenylene diisocyanate, 2,4,6-triisopropyl-m-phenylene diisocyanate, 2,4,6-trimethyl-1,3-phenylene diisocyanate, 1,5 naphthylene diisocyanate, 3,3'-dimethyl-4,4'-biphenyl diisocyanate, 3,3'-dimethoxy-4,4' biphenyl diisocyanate, diphenylene methane 2,4'-diisocyanate, diphenylene methane-2,2'-diisocyanate, diphenylene methane-4,4' diisocyanate, triphenylmethane-4,4',4"-triisocyanate, 5-(p-isocyanatobenzyl)-2-methyl m-phenylene diisocyanate, 4,4-diisocyanato-3,3,5,5-tetraethyldiphenylmethane, 5,5' ureylene di-o-tolyl diisocyanate, 4-[(5-isocyanato-2-methylphenyl)methyl]-m-phenylene diisocyanate, 4-[(3-isocyanato-4-methylphenyl)methyl]-m-phenylene diisocyanate, 2,2' methylene-bis[6-(o-isocyanatobenzyl)phenyl] diisocyanate.

Aliphatic isocyanates which have a carbon backbone (without the NCO groups contained) of 3 to 30 carbon atoms, preferably 4 to 20 carbon atoms, are preferably used. Examples of aliphatic polyisocyanates are bis(isocyanatoalkyl) ethers or alkane diisocyanates such as methane diisocyanate, propane diisocyanates, butane diisocyanates, pentane diisocyanates, hexane diisocyanates (e.g. hexamethylene diisocyanate, HDI), heptane diisocyanates (e.g. 2,2-dimethylpentane-1,5-diisocyanate), octane diisocyanates, nonane diisocyanates (e.g. trimethyl HDI (TMDI), usually as a mixture of the 2,4,4- and 2,2,4-isomers), 2-methylpentane-1,5-diisocyanate (MPDI), nonane triisocyanates (e.g. 4-isocyanatomethyl-1,8-octane diisocyanate, 5 methylnonane diisocyanate), decane diisocyanates, decane triisocyanates, undecane diisocyanates, undecane triisocyanates, dodecane diisocyanates, dodecane triisocyanates, 1,3- and 1,4-bis-(isocyanatomethyl)cyclohexane (H6XDI), 3 isocyanatomethyl-3,5,5-trimethylcyclohexylisocyanate(isophoronediisocyanate,IPDI), bis-(4-isocyanatocyclohexyl)methane (H12MDI), bis-(isocyanatomethyl)norbornane (NBDI), 3(4)-isocyanatomethyl-1-methyl-cyclohexyl isocyanate (IMCI), octahydro-4,7 methano-1H-indenedimethyl diisocyanate, norbornene diisocyanate, 5-isocyanato-1-(isocyanatomethyl)-1,3,3-trimethylcyclohexane, ureylene-bis(p-phenylenemethylene-p phenylene)diisocyanate.

Particularly preferred isocyanates are hexamethylene diisocyanate (HDI), trimethyl HDI (TMDI), pentane diisocyanate (PDI), 2-methylpentane-1,5-diisocyanate (MPDI), 3-isocyanatomethyl-3,5,5-trimethylcyclohexylisocyanate (isophorone diisocyanate; IPDI), 1,3- and 1,4-bis-(isocyanatomethyl)cyclohexane (HeXDI), bis-(isocyanatomethyl)norbornane (NBDI), 3(4)-isocyanatomethyl-1-methyl cyclohexyl isocyanate (IMCI) and/or 4,4'-bis(isocyanatocyclohexyl) methane (H12MDI) or mixtures of these isocyanates.

Even more preferably, the polyisocyanates are present as prepolymers (preferably homopolymers), biurets (preferably diisoxyanate-biuret-additionproducts), isocyanurates, iminooxadiazinediones, uretdiones and/or allophanates, which can be produced by oligomerizing difunctional isocyanates as described above or by reacting the isocyanate compounds as described above with polyols or polyamines, individually or as a mixture, and which have an average NCO functionality of 2 or more. Preferably, the average NCO functionality is in the range of from 2.5 to 5.5., more preferably 2.7 to 4.0, and most preferably 2.9 to 3.6.

Examples of suitable, commercially available isocyanates are Desmodur® N 3900, Desmodur® N 100, Desmodur® N 3200, Desmodur® N 3300, Desmodur® ultra N 3600, Desmodur® N 3700, Desmodur® N 3800, Desmodur® XP 2675, Desmodur® 2714, Desmodur® 2731, Desmodur® N 3400, Desmodur® XP 2679, Desmodur® XP 2731, Desmodur® XP 2489, Desmodur® E 3370, Desmodur® XP 2599, Desmodur® XP 2617, Desmodur® XP 2406, Desmodur® XP 2551, Desmodur® XP 2838, Desmodur® XP 2840, Desmodur® N3500, Desmodur® NZ 300, Desmodur® E 30600, Bayhydur XP 2547, Bayhydur XP 2451/1, Bayhydur Ultra 307 Desmodur® VL, Desmodur® VL 50, Desmodur® VL 51, Desmodur® ultra N 3300, Desmodur® eco N 7300, Desmodur® E23, Desmodur® E XP 2727, Desmodur® E 2863 XP, Desmodur® H, Desmodur® VKS 20 F, Desmodur® 44V20I, Desmodur® 44P01, Desmodur® 44V70 L (jeweils erhältlich von Covestro AG), Tolonate HDB, Tolonate HDB-LV, Tolonate HDT, Tolonate HDT-LV LM, Tolonate HDT-LV2, Tolonate XF 450, Tolonate X FLO 100, Tolonate X F 800 (jeweils erhältlich von Vencorex), Basonat HB 100, Basonat HI 100, Basonat HI 100 NG, Basonat HI 2000 NG (jeweils erhältlich von BASF), Takenate 500, Takenate 600, Stabio D-376N (jeweils erhältlich von Mitsui), Duranate 24A-100, Duranate TPA-100, Duranate THA-100 (jeweils erhältlich von Asahi Kasai), Coronate HXR, Coronate HXLV, Coronate HX, Coronate HK (all available from Tosoh).

One or more polyisocyanates are contained in the resin component (A) preferably in a proportion of from 20 to 100 wt.-%, more preferably in a proportion of from 30 to 90 wt.-% and even more preferably in a proportion of from 35 to 65 wt.-%, based on the total weight of the isocyanate resin component (A).

<u>Hardener component (B) of (iii)</u>

The hardener component (B) comprises at least one amine which is reactive to isocyanate groups and has an average NH functionality of 2 or more.

According to a preferred embodiment, the amine which is reactive to isocyanate groups is selected from the

group consisting of aliphatic, alicyclic, araliphatic and aromatic amines, particularly preferably from the group consisting of alicyclic and aromatic amines.

Examples of suitable amines which are reactive to isocyanate groups are given below, but without restricting the scope of the invention. These can be used either individually or in any mixtures with one another. Examples are: 1,2 diaminoethane(ethylenediamine), 1,2-propanediamine, 1,3-propanediamine, 1,4-diaminobutane, 2,2-dimethyl-1,3-propanediamine (neopentanediamine), diethylaminopropylamine (DEAPA), 2-methyl-1,5-diaminopentane, 1,3-diaminopentane, 2,2,4- or 2,4,4-trimethyl-1,6-diaminohexane and mixtures thereof (TMD), 1,3-bis(aminomethyl)-cyclohexane, 1,2-bis(aminomethyl)cyclohexane, hexamethylenediamine (HMD), 1,2- and 1,4-diaminocyclohexane (1,2-DACH and 1,4-DACH), bis(4-amino-3-methylcyclohexyl)methane, diethylenetriamine (DETA), 4-azaheptane-1,7-diamine, 1,11-diamino-3,6,9-trioxundecane, 1,8-diamino-3,6-dioxaoctane, 1,5-diamino-methyl-3-azapentane, 1,10-diamino-4,7-dioxadecane, bis(3-aminopropyl)amine, 1,13-diamino-4,7,10-trioxatridecane, 4-aminomethyl-1,8-diaminooctane, 2-butyl-2-ethyl-1,5-diaminopentane, N,N-bis(3-aminopropyl)methylamine, triethylenetetramine (TETA), tetraethylenepentamine (TEPA), pentaethylenehexamine (PEHA), 1,3-benzenedimethanamine (m-xylylenediamine, mXDA), 1,4-benzenedimethanamine (p-xylylenediamine, pXDA), 5-(aminomethyl)bicyclo[[2.2.1]hept-2-yl]methylamine (NBDA, norbornane diamine), dimethyldipropylenetriamine, dimethylaminopropyl-aminopropylamine(DMAPAPA), 2,4-diamino-3,5-dimethylthiotoluene (dimethylthio-toluene diamine DMTDA) in particular a mixture of isomers of 6-methyl-2,4-bis(methylthio)phenylene-1,3-diamine and 2-methyl-4,6-bis(methylthio)phenylene-1,3-diamine (also denoted as DMTDA, e.g., Ethacure® 300), 3-aminomethyl-3,5,5-trimethylcyclohexy amine (isophorone diamine (IPDA)), diaminodicyclohexylmethane (PACM), diethylmethylbenzenediamine (DETDA), 3,3'-diaminodiphenylsulfone (33 dapsone), 4,4'-diaminodiphenylsulfone (44 dapsone), mixed polycyclic amines (MPCA) (e.g. Ancamine 2168), dimethyldiaminodicyclohexylmethane (Laromin C260), 2,2-bis(4-aminocyclohexyl)propane, (3(4),8(9)bis(aminomethyldicyclo[5.2.1.02, 6] decane (mixture of isomers, tricyclic primary amines; TCD diamine), methylcyclohexyl diamine (MCDA), N,N'-diaminopropyl-2 methyl-cyclohexane-1,3-diamine, N,N'-diaminopropyl-4-methylcyclohexane-1,3 diamine, N-(3-aminopropyl) cyclohexylamine, and 2-(2,2,6,6-tetramethylpiperidin-4 yl)propane-1,3-diamine, 2-methylpentandiamine (e.g. DYTEK® A), N-ethylaminopiperazine (N-EAP), N-aminoethyl-piperazine (N-AEP), 2,4,6-trimethyl-m-phenylendiamine, 2,4,6-tri(propan-2-yl)benzol-1,3-diamine, 4-ethyl-2,6-di(propan-2-yl)benzol-1,3-diamine, 4-methyl-2,6-di(propan-2-yl)benzol-1,3-diamine, 2,5-bis(methylsulfonyl)-1,4-benzoldiamine, chlorodiethylmethylbenzoldiamine (e.g. 5-chloro-4,6-diethyl-2-methyl-1,3-benzoldiamine, 5-chloro-4,6-diethyl-6-methyl-1,3-benzoldiamine), 4-fluoro-5-(1-methylethyl)-1,2-benzoldiamine, 4,4'-methylen-bis[N-(1-methylpropyl)phenylamin], 4,4'-methylenbis(2,6-diethylaniline) (MBDA), 4,4'-methylenbis(N-sec-butylcyclohexanamine) (z.B. Clearlink® 1000), 4,4'-methylen-bis[N-(1-methylpropyl)-3,3'-dimethylcyclohexaneamine] (z.B. Clearlink® 3000), 4,4'-methylen-bis(3-chloro-2,6-diethylaniline) (MBCDA), the reaction product of 2-propenenitrile with 3-amino-1,5,5-trimethylcyclohexanmethanamine (e.g. Jefflink® 745), 3-((3-(((2-cyanoethyl)amino)methyl)-3,5,5-trimethylcyclohexyl)amino)propiononitrile (e.g. Jefflink® 136 or Baxxodur® PC136), N,N'-di-sec-butyl-p-phenylendiamine, 2,4,6-trimethyl-m-phenylendiamine and 2,4,6-trimethyl-5-nitro-1,3-benzoldiamine as well as mixtures of two or more of these amines.

Particularly preferred amines are diethylmethylbenzenediamine (DETDA, such as Ethacure® 100 Plus), 2,4-diamino 3,5-dimethylthiotoluene (dimethylthio-toluenediamine, DMTDA) in particular a mixture of isomers of 6-methyl-2,4-bis(methylthio)phenylene-1,3-diamine and 2-methyl-4,6-bis(methylthio)phenylene-1,3-diamine (also denoted as DMTDA, e.g., Ethacure® 300), 4,4'-methylene-bis[N (1-methylpropyl)phenylamine] (such as Unilink® 4200), 4,4'-methylenebis(2,6-diethylaniline) (MBDA), 4,4'-methylenebis(N sec-butylcyclohexanamine) (Clearlink@ 1000), 3,3'-diaminodiphenylsulfone (33 dapsone), 4,4'-diaminodiphenylsulfone (44 dapsone), N,N'-di-sec-butyl-p phenylenediamine (such as Unilink® 4100), and 2,4,6-trimethyl-m-phenylenediamine, 4,4'-methylenebis(N-(1 methylpropyl)-3,3'-dimethylcyclohexanamine (Clearlink@ 3000), the reaction product of 2-propenenitrile with 3-amino-1,5,5-trimethylcyclohexanemethanamine (Jefflink@ 745), 3-((3-(((2-cyanoethyl)amino)methyl)-3,5,5-trimethylcyclohexyl)amino)propiononitrile (Jefflink@ 136 or Baxxodur@ PC136), a mixture of DETDA and IPDA (e.g. Ethacure® 270), a mixture of 4,4'-methylenebis(N-sec-butylaniline), 4,4'-methylenebis(2,6-diethylaniline) and diethylmethylbenzoldiamine (e.g. Ethacure® 520), 4,4'-methylene-bis(3-chloro-2,6-diethylaniline) (MBCDA), chlorodiethylmethylbenzoldiamine (e.g. 5-chloro-4,6-diethyl-2-methyl-1,3-benzoldiamine, 5-chloro-4,6-diethyl-6-methyl-1,3-benzoldiamine), Aradur® 223, Aradur® 33225, Ancamide® 506, Ancamine® 2167, Ancamide® 2426, Ancamide® 3011, Ancamide® 3419, Amicure® IC-322, Epilox®-Hardener H 14-50, Epilox®-Hardener H15-60, Epilox®-Hardener M1148, EPIKURE Curing Agent 3050, EPIKURE Curing Agent F205, Ethacure® 300, Ethacure® 100 Plus.

Most particularly preferred amines are 4,4'-methylene-bis[N-(1 methylpropyl)phenylamine], an isomer mixture of 6-methyl-2,4 bis(methylthio)phenylene-1,3-diamine and 2-methyl-4,6-bis(methylthio)phenylene-1,3 diamine (Ethacure@ 300), diethyltoluoldiamine (DETDA, e.g. Ethacure® 100 Plus), 4,4'-methylene-bis[N-(1-methylpropyl)-phenylamine] (e.g. Unilink® 4200), 4,4'-methylene-bis(3-chloro-2,6-diethylaniline) (MBCDA), chlorodiethylmethylbenzolediamine, Aradur® 33225, Ancamide® 3419, Epilox®-Hardener H 14-50. Most preferred are DMTDA; DETDA, and mixtures therefrom.

One or more amines are contained in the amine hardener component (B) preferably in a proportion of from 20 to

100 wt.-%, more preferably in a proportion of from 30 to 70 wt.-% and even more preferably in a proportion of from 35 to 70 wt.-%, based on the total weight of the amine hardener component (B).

The quantity ratios of the polyisocyanate and the amine of the multi-component resin system are preferably selected such that the ratio of the average NCO functionality of the polyisocyanate to the average NH functionality of the amine is between 0.3 and 2.0, preferably between 0.5 and 1.8, more preferably between 0.5 and 1.5, even more preferably between 0.7 and 1.5 and most preferably 0.7 to 1.3.

A mixture of different polyisocyanates and/or different amines can be used to adjust the rate of curing. In this case, their quantity ratios are selected such that the ratio of the averaged NCO functionality of the isocyanate mixture to the averaged NH functionality of the amine mixture is between 0.3 and 2.0, preferably between 0.5 and 1.8, more preferably between 0.5 and 1.5, even more preferably between 0.7 and 1.5 and most preferably between 0.7 and 1.3.

Preparation process

The present invention is further related to a process for preparing a multi-component system according to the present invention, wherein the process comprises the steps of

1. Providing at least two fillers ($F_1$, $F_2$), wherein the at least wo fillers each have an average particle size $d_{50}$ in the range of from 1 to 800 $\mu$m and wherein the average particle size $d_{50}$ of each of the at least two fillers ($F_1$, $F_2$) differs from each other of the at least two fillers ($F_1$, $F_2$);

2. Providing a list of fillers comprising the at least two fillers ($F_1$, $F_2$);

3. Selecting two selected fillers ($F_{S1}$, $F_{S2}$) from the list of fillers having the largest ratio of average particle sizes $d_{50}$ among all fillers of the list of fillers and removing the two selected fillers ($F_{S1}$, $F_{S2}$) from the list fillers;

4. Calculating the maximum packing density $\Phi$ und the grain volumes of a mixture of the two selected fillers ($F_{S1}$) and ($F_{S2}$), ($y_1$) and ($y_2$), for a maximum packing density $\Phi$;

5. Determining the average particle size $d_{50}$ of the mixture of the two selected fillers ($F_{S1}$) and ($F_{S2}$);

6. Adding the mixture of the two selected fillers ($F_{S1}$) and ($F_{S2}$) to the list of fillers;

7. If the list of fillers comprises more than one filler, reprocessing steps 3-6,;

8. Calculating the mass quantity ratios of the at least two fillers ($F_1$, $F_2$) from the calculated grain volume ratios via the bulk density of the at least two fillers ($F_1$, $F_2$);

9. Providing a resin component (A) comprising at least one reactive resin, and a hardener component (B) comprising at least one hardener for the at least one reactive resin contained in the resin component (A);

10. Mixing the resin component (A) and/or the hardener component (B) with the at least two fillers ($F_1$, $F_2$) in the quantity ratio as determined in step 6) yielding the multi-component resin system.

Preferably, step 4 of the process of the present invention is carried out using the Toufar model by form by formula (I)

$$\Phi = \frac{1}{\frac{y_1}{\Phi_1}+\frac{y_2}{\Phi_2}-y_2*\left(\frac{1}{\Phi_2}-1\right)*\frac{d_{50,2}-d_{50,1}}{d_{50,1}+d_{50,2}}*k_s} \qquad \text{(I)}$$

wherein

$$k_s = 1-\frac{1-(1+4*\mathrm{x})}{(1+\mathrm{x})^4}, \qquad \text{(II)}$$

$$x = \frac{y_1}{y_2} * \frac{\frac{\Phi_2}{\Phi_1}}{1-\Phi_2}, \quad \text{(III)}$$

and

$$y_2 = 1 - y_1 \quad \text{(IV)}$$

and wherein

| | |
|---|---|
| $d_{50,1}$,$d_{50,2}$ | = the average particle sizes of the selected two fillers ($F_{S1}$, $F_{S2}$) |
| $\Phi_1$,$\Phi_2$ | = the inherent packing densities of the selected two fillers ($F_{S1}$, $F_{S2}$); quotient of grain density and bulk density |
| $y_1$,$y_2$ | = the grain volumes of the two selected fillers ($F_{S1}$, $F_{S2}$); $0 < y_1, y_2 < 1$ |
| $k_s$ | = a factor that accounts for statistical possibility of an optimal packing as a function of amounts and packing densities, quotient of bulk density of $F_{S2}$ and void volume of $F_{S1}$ |
| x | = the quotient of the bulk volume of $F_{S2}$ and the void volume of $F_{S1}$ |

wherein the grain density, the grain volume, and the void volume are determined using a pycnometer, and wherein the bulk density is determined using a measuring cylinder.

Preferably, step 5 of the process of the present invention is carried out by preparing the mixture of the at least two selected fillers ($F_{S1}$) and ($F_{S2}$) and measuring the average particle size $d_{50}$ or by determining a sieve line for the mixture of the at least two selected fillers from the sieve lines of each of the at least two selected fillers ($F_{S1}$) and ($F_{S2}$) and determining the average particle size $d_{50}$ therefrom.

By implementing the Toufar model, the process can achieve the quantity ratio of the filler to be optimized in a way to achieve respectively high packing densities, which result in high filling degrees without negatively impacting the viscosity of the multi-component resin system.

<u>Application and Use</u>

The multi-component resin system according to the present invention is a kit with two or more components (preferably a two-component system) with component (A) containing one or more reactive synthetic resin, and a hardener component (B), where further additives may be provided in one or both of the components, wherein the mutually reactive components (A) and (B) and optionally further separate components are contained in such a way that they cannot react with one another during storage. Preferably components (A) and (B) are contained in that they are not in contact with one another prior to use. Hence during use components (A) and (B) can be mixed and, if necessary, introduced the for fixing at the desired location, for example directly in front of or in a hole or gap, in such a way that the curing reaction can take place there.

Also suitable are cartridges, for example of plastic, ceramic or in particular glass, in which the components are arranged separated from one another by (for example when an anchoring element is driven into a hole or gap, such as a drilled hole) destructible boundary walls or integrated separate destructible containers, for example as nested cartridges, such as ampoules; as well as in particular multi-component or preferably two-component cartridges, in the chambers of which the preferably two components (in particular components (A) and (B)) of the luting mortar according to the invention are contained for storage prior to use, wherein preferably a static mixer can also be part of the corresponding kit. The use of a fixing mortar according to the invention at the desired place of use is then carried out by mixing the associated components.

Hence, the present invention provides a mortar mass prepared by mixing the resin component (A) and the hardener component (B) of the multi-component resin system according to the present invention.

The multi-component resin system according to the invention is preferably used for construction purposes. The term "*for construction purposes*" means construction bonding of concrete/concrete, steel/concrete or steel/steel or one of the mentioned materials on other mineral materials, structural reinforcement of building elements made of concrete, masonry and other mineral materials, reinforcement applications with fiber-reinforced polymers of construction objects, chemical fastening on surfaces made of concrete, steel or other mineral materials, in particular the chemical fixing of structural elements and anchoring means, such as anchor rods, anchor bolts, (threaded) rods, (threaded) sleeves, concrete irons, screws and the like, in drilled holes in various substrates, such as (steel) concrete, masonry, other mineral materials, metals (e.g. steel), ceramics, plastics, glass and wood.

Preferably, the present invention is concerned with the use of the multi-component resin system or the mortar composition of the present invention for chemical fixing of structural elements in holes, particularly drilled holes, or

crevices, preferably in a building substrate.

Finally, the present invention provides the use of the at least two fillers ($F_1$, $F_2$) in the mortar composition or the multi-component resin system according to the present invention to increase the creep resistance thereof.

## EXAMPLES

All chemicals and ingredients of the compositions listed herein below are commercially available and have been used at commercial grade unless otherwise noted.

All weight percentage values given in the examples refer to the total weight of the composition described as the basis for calculation, unless otherwise stated.

Resin component (A)

In a plastic bucket, the liquid epoxy resins as given in the below tables (amounts in wt.-%) were mixed with a wood spatula. Then, the filler and thickener were added and by hand premixed before mixing it further into a dissolver (PC Laborsystem, volume 1 l) during 8.5 minutes under 80 mbar reduced pressure at 3500 rounds per minute (rpm).

The determination of the epoxy equivalent weight (EEW, i.e., the amount of resin in g containing 1 mole of epoxy groups) values in the examples below is carried out in a manner known to the skilled person on the basis of the formulation of the reaction mixture from the known h equivalents of the reactants and raw materials used, from which they are calculated. The EEW values are usually indicated on the starting materials by the manufacturers, or they are determined or calculated according to known methods.

Hardener component (B)

For the preparation of hardener component (B), the specified amount of accelerator or accelerator mixture as indicated (in wt.-%) in the below tables was added in a plastic bucket and dissolved in the amine mixture. Then, the filler and thickener were added and premixed by hand before mixing it further into a dissolver (PC Laborsystem, volume 1 l) during 8.5 minutes under 80 mbar reduced pressure at 3500 rpm.

For the specific case, in which inorganic accelerated hardeners are used, calcium nitrate was employed as an 80% solution in glycerine. For that, 400 g of $Ca(NO_3)_2$ tetrahydrate were added to 100 g of glycerine and stirred at 50 °C until complete dissolution (about 3 hours).

For the specific case, in which a novolac accelerator is used, novolac accelerator was previously dissolved in the amine mixture. For that, in a 2 l jacketed double layer glass reactor equipped with a mechanical stirrer and a reflux condenser, the amine mixture and ancamine K54 were added at 23 °C and stirred for 15 minutes. Then, while stirring, Phenolite TD-2131 was added in small portions and the temperature of the reaction increased to 30 °C. After 1 h, the temperature was increased to 40 °C and the mixture stirred for 3 h until the solid was completely dissolved. Then, the hardener was removed from the reactor and cooled to room temperature (RT) before use.

The AHEW (amine hydrogen equivalent weight, amount of resin containing 1 mol reactive H) is determined in a manner known to those skilled in the art on the basis of the formulation of the reaction mixture from the known h equivalents of the reactants and raw materials used, from which they are calculated.

For a simple amine, the calculation of the AHEW is explained using meta-xylylenediamine (MW = 136 g/mol, functionality = 4 eq/mol) as a purely illustrative example:

$$AHEW = \frac{M_W}{Functionality} = \frac{136}{4}\left[\frac{g}{eq}\right] = 34\left[\frac{g}{eq}\right]$$

The packing density Φ can be calculated with the Toufar's model (Packing of aggregates, by Per Goltermann, Vagn Johansen and Lars PalbØl ACI Materials Journal, V.94, No 5, September-October 1997) for the filler having particles with larger average particle size ($F_{S1}$) and the filler having particles with lower average particle size ($F_{S2}$):

$$\Phi = \frac{1}{\frac{y_1}{\Phi_1}+\frac{y_2}{\Phi_2}-y_2*\left(\frac{1}{\Phi_2}-1\right)*\frac{d_{50,2}-d_{50,1}}{d_{50,1}+d_{50,2}}*k_s} \quad \text{(I)}$$

wherein

$$k_s = 1 - \frac{1-(1+4*x)}{(1+x)^4}, \quad (II)$$

$$x = \frac{y_1}{y_2} * \frac{\frac{\Phi_2}{\Phi_1}}{1-\Phi_2}, \quad (III)$$

and

$$y_2 = 1 - y_1 \quad (IV)$$

and wherein

| | |
|---|---|
| $d_{50,1}$, $d_{50,2}$ | = the average particle sizes of the selected two fillers ($F_{S1}$, $F_{S2}$) |
| $\Phi_1$, $\Phi_2$ | = the packing densities of the selected two fillers ($F_{S1}$, $F_{S2}$); quotient of grain density and bulk density |
| $y_1$, $y_2$ | = the grain volumes of the two selected fillers ($F_{S1}$, $F_{S2}$); $0 < y_1, y_2 < 1$ |
| $k_s$ | = a factor that accounts for statistical possibility of an optimal packing as a function of amounts and packing densities, quotient of bulk density of $F_{S2}$ and void volume of $F_{S1}$ |
| $x$ | = the quotient of the bulk volume of $F_{S2}$ and the void volume of $F_{S1}$ |

Mortars mixing and injection into a borehole

The components (A) and (B) as indicated in the below tables were mixed with a stoichiometry one to one based on their EEQ and AHEQ values.

The component A and B were filled into 3:1 hard cartridges. These hard cartridges were connected to a static mixer, mounted on a dispenser and the material press-out. The first 3 trigger pulls of material were discharged insuring proper mixing quality before injection in the borehole.

Viscosity measurements

The steady-state viscosity of the samples was measured using a plate-plate measuring system in accordance with DIN 53019. The diameter of the plate is 20 mm and the gap distance is 3 mm. To prevent the sample from escaping from the gap, a Teflon limiting ring is used, which has a distance of 1 mm from the upper plate. The measuring temperature is 25 °C. The method consists of three sections: 1. low shear, 2. high shear, 3. low shear. In the 1st section, shear is applied for 3 minutes at 0.5 /s. In the 2nd section, the shear rate is increased logarithmically from 0.8 /s to 100 /s in 8 steps of 15 seconds each. The individual steps are: 0.8 /s; 1.724 /s; 3.713 /s; 8 /s; 17.24 /s; 37.13 /s; 80 /s; 100 /s. The 3rd section is the repetition of the 1st section. At the end of each section, the viscosities are read out. Three measurements were carried out in each case, whereby the final values are the average of the three measurements.

Dispensing forces measurements

The extrusion forces were measured on the Zwick Roell 50 kN tensile strength testing machine. First, the resin and hardener components produced in the dissolver are filled into the two-cartridge system. Then a static mixer (Sulzer Quadromixer with 24 chambers) is screwed onto the connector of the cartridge system. A pressing frame is then attached to the crossbeam. Subsequently, a four-legged base with the appropriate attachment for the test is placed on the floor of the machine. Finally, the 2K cartridge system is inserted into the attachment on the four-legged base and the actual measurement begins: The sample is pressed out vertically at a constant speed of 100 mm/min. The force required is documented as a function of the measuring path. The test ends when the recorded measuring distance of 110 mm has been completely covered. An average force "$F_{mean}$" is then determined as the squeezing force in a range of 50 mm and 100 mm of the measuring distance.

Average particle size $d_{50}$

The particle size analysis was carried out using the LS 13320 device from Beckman Coulter. The textbook *"Mechanical Process Engineering - Particle Technology 1"* was used for the following explanations. Particle size distributions, which are determined using laser diffractometry, are based on the fact that particles of different sizes scatter laser light differently. Scattering is divided into diffraction, refraction, and reflection. The intensity of the light I

scattered by a single particle in relation to the intensity of the incident light $I_0$ depends, according to equation (V), on the scattering angle $\Theta$, the polarization angle $\Phi$, the refractive index n, the light wavelength $\lambda$ and the particle size d. The assumption is made that the particles are spherical.

$$\frac{I}{I_0} = f(\Theta, \Phi, n, \lambda, d) \quad \text{(V)}$$

The influences of $\lambda$ and *d* are summarized in equation (VI) as follows for a sphere.

$$\alpha = \frac{\pi\, d}{\lambda} \quad \text{(VI)}$$

With equation (VI), equation (VII) below follows from equation (V):

$$\frac{I}{I_0} = f(\Theta, \Phi, n, \alpha) \quad \text{(VII)}$$

Mie has calculated this intensity distribution theoretically. The Mie theory is generally valid for any $\alpha$- and *n*-values but is divided into three areas for $\alpha \ll 1$ and $\alpha \gg 1$ due to possible simplifications.

The Rayleigh range for particle sizes is smaller than 0.02 μm. The Mie range for particle sizes is from 0.02 μm to 2 μm. The Fraunhofer range, also known as the geometric optics range, for particle sizes is larger than 2 μm. In addition to the Mie and Fraunhofer theories, the LS 13320 MW device from Beckman Coulter uses the so-called PIDS technology, which exploits the polarizability of the particles with the aid of laser light, thereby enabling more precise detection of smaller particles in the ultrafine range.

The evaluation of particle collectives is very complex, so that the measuring devices use an internal computer for the extensive evaluation. The detectable particle size range of the measuring device used is 0.017 μm to 2000 μm.

Figure 2 shows the structure of the optical system of the measuring device used. The sample suspended in water is pumped through the two cells, where it scatters irradiated light depending on the particle size. The detectors record the scattered light, and the particle size distribution can then be calculated using the associated software. For the measurements, the samples were slurried with deionized water and exposed to ultrasound for 30 s. An ultrasonic finger was held in the suspension to dissolve any agglomerations with the ultrasound. Part of the suspension was then introduced into the measuring cell of the device. The volume distribution was used to determine the $d_5$, $d_{50}$ and $d_{95}$ values. The $d_{50}$ value was used for the evaluation. The $d_{50}$ value describes the median of a distribution, i.e., 50% of the particles in the sample are smaller than the particle size indicated by the $d_{50}$ value. The samples were analyzed using a combination of Mie theory and PIDS technology. The Beckman Coulter LS13320 software version 6.01 was used for the measurements and evaluations was used. The chosen refractive indices of samples were selected using the refractive index library integrated in the software.

<u>Sieve lines of Filler mixtures</u>

Sieve lines of filler mixtures can be calculated from sieve lines of the individual mixtures using equation (VIII):

$$X_j = \sum_{i=1}^{n} \frac{1}{100}\left(x_i a_{i,j}\right) \quad \text{(VIII)}$$

wherein

$X_j$ number of particles having particle size j
$x_i$ percentage of individual sieve line in the mixture sieve line (corresponds to the percent
$a_i$ number of particles sieved in each sieve line with a certain particle size.

<u>Creep Tests</u>

To determine the creep performance, sustain load test at maximum temperature performance were made following the description given by the guideline ETAG 001 part 5 (Guideline for European Technical Approval of Metal Anchors for Use in Concrete) superseded by EAD 330499-00-0601. In these experiments, threaded rods (size M12) were installed in 14 mm cleaned (2x compressed air 6 bar, 2x brushed and 2x compressed air 6 bar) hammered drilled boreholes

made in steel-jacketed concrete cylinder (C20/25) with 72 mm embedment depth. After 24 h curing time, the creep tested were started and performed for more than 7 days.

Table 1: Reference Example 1: (without optimized packing densities)

| | [wt.-%] | Function |
|---|---|---|
| **Component A** | | |
| Araldite® GY 240 | 24.4 | Epoxy resin |
| Araldite® GY 282 | 13.2 | Epoxy resin |
| Araldite® DY-026 SP | 4.7 | Reactive diluent |
| Araldite® DY-T-CH | 4.7 | Reactive diluent |
| Dynasylan® GLYMO | 3 | Adhesion promoter |
| Cab-o-Sil® TS-720 | 2 | Thickener |
| Millisil W12 | 48 | Common filler |
| Nekafin 2 | - | Filler |
| Microsit® H20 | - | Filler |
| Strobelsand P10 | - | Filler |
| Microsit® H20 | - | Filler |
| EEW | 323 | |
| | | |
| **Component B** | | |
| mXDA | 48.6 | Amine |
| $Ca(NO_3)_2$ (80% in Glycerin) | 1.4 | Additive |
| Cab-o-Sil® TS-720 | 5.2 | Thickener |
| Millisil W12 | 44.9 | Filler |
| Strobelsand P10 | - | Filler |
| AHEW | 70 | |

Table 2: Reference Example 2: (without optimized packing densities)

| | [wt.-%] | Function |
|---|---|---|
| **Component A** | | |
| Araldite® GY 240 | 19.2 | Epoxy resin |
| Araldite® GY 282 | 10.4 | Epoxy resin |
| Araldite® DY-026 SP | 3.7 | Reactive diluent |
| Araldite® DY-T-CH | 3.7 | Reactive diluent |
| Dynasylan® GLYMO | 3 | Adhesion promoter |
| Cab-o-Sil® TS-720 | 1.6 | Thickener |
| Millisil W12 | 58.4 | Common filler |
| Nekafin 2 | - | Filler |
| Microsit® H20 | - | Filler |
| Strobelsand P10 | - | Filler |
| Microsit® H20 | - | Filler |

(continued)

| | [wt.-%] | Function |
|---|---|---|
| **Component A** | | |
| EEW | 406 | |
| | | |
| **Component B** | | |
| mXDA | 38.9 | Amine |
| $Ca(NO_3)_2$ (80% in Glycerin) | 1.1 | Additive |
| Cab-o-Sil® TS-720 | 4.1 | Thickener |
| Millisil W12 | 55.9 | Filler |
| Strobelsand P10 | - | Filler |
| Microsit® H20 | - | Filler |
| AHEW | 88 | |

Table 3: Reference Example 3: (without optimized packing densities)

| | [wt.-%] | Function |
|---|---|---|
| **Component A** | | |
| Araldite® GY 240 | 14 | Epoxy resin |
| Araldite® GY 282 | 7.6 | Epoxy resin |
| Araldite® DY-026 SP | 2.7 | Reactive diluent |
| Araldite® DY-T-CH | 2.7 | Reactive diluent |
| Dynasylan® GLYMO | 3 | Adhesion promoter |
| Cab-o-Sil® TS-720 | 1.2 | Thickener |
| Millisil W12 | 68.8 | Common filler |
| Nekafin 2 | - | Filler |
| Microsit® H20 | - | Filler |
| Strobelsand P10 | - | Filler |
| EEW | 546 | |
| | | |
| **Component B** | | |
| mXDA | 29.2 | Amine |
| $Ca(NO_3)_2$ (80% in Glycerin) | 0.9 | Additive |
| Cab-o-Sil® TS-720 | 3.1 | Thickener |
| Millisil W12 | 66.9 | Filler |
| Strobelsand P10 | - | Filler |
| Microsit® H20 | - | Filler |
| AHEW | 117 | |

Table 4: Reference Example 4: (without optimized packing densities)

| | [wt.-%] | Function |
|---|---|---|
| **Component A** | | |
| Araldite® GY 240 | 24.4 | Epoxy resin |
| Araldite® GY 282 | 13.2 | Epoxy resin |
| Araldite® DY-026 SP | 4.7 | Reactive diluent |
| Araldite® DY-T-CH | 4.7 | Reactive diluent |
| Dynasylan® GLYMO | 3 | Adhesion promoter |
| Cab-o-Sil® TS-720 | 2 | Thickener |
| Millisil W12 | 48 | Common filler |
| Supracem 45 | - | Filler |
| Microsit® H20 | - | Filler |
| Strobelsand P10 | - | Filler |
| EEW | 323 | |
| | | |
| **Component B** | | |
| mXDA | 27.3 | Amine |
| $Ca(NO_3)_2$ (80% in Glycerin) | 1.4 | Additive |
| Cab-o-Sil® TS-720 | 1.2 | Thickener |
| Millisil W12 | 70.1 | Filler |
| Strobelsand P10 | - | Filler |
| Microsit® H20 | - | Filler |
| AHEW | 123 | |

Parts of filler W12 in the above reference examples were replaced by special filler (F) to achieve an optimized packing density in Inventive Examples 1 to 5 according to Toufar's model.

Table 5: Inventive Example 1: (optimized packing densities)

| | [wt.-%] | Function |
|---|---|---|
| **Component A** | | |
| Araldite® GY 240 | 24.4 | Epoxy resin |
| Araldite® GY 282 | 13.2 | Epoxy resin |
| Araldite® DY-026 SP | 4.7 | Reactive diluent |
| Araldite® DY-T-CH | 4.7 | Reactive diluent |
| Dynasylan® GLYMO | 3 | Adhesion promoter |
| Cab-o-Sil® TS-720 | 2 | Thickener |
| Millisil W12 | 5 | Common filler |
| Nekafin 2 | 4.5 | Filler |
| Microsit® H20 | 12 | Filler |
| Strobelsand P10 | 26.5 | Filler |
| EEW | 323 | |
| | | |

(continued)

| Component B | | |
|---|---|---|
| mXDA | 48.6 | Amine |
| $Ca(NO_3)_2$ (80% in Glycerin) | 1.4 | Additive |
| Cab-o-Sil® TS-720 | 5.2 | Thickener |
| Millisil W12 | 5.5 | Filler |
| Strobelsand P10 | 25.9 | Filler |
| Microsit® H20 | 13.5 | Filler |
| AHEW | 70 | |

Table 6: Inventive Example 2: (optimized packing densities)

| | [wt.-%] | Function |
|---|---|---|
| **Component A** | | |
| Araldite® GY 240 | 19.2 | Epoxy resin |
| Araldite® GY 282 | 10.4 | Epoxy resin |
| Araldite® DY-026 SP | 3.7 | Reactive diluent |
| Araldite® DY-T-CH | 3.7 | Reactive diluent |
| Dynasylan® GLYMO | 3 | Adhesion promoter |
| Cab-o-Sil® TS-720 | 1.6 | Thickener |
| Millisil W12 | 6 | Common filler |
| Nekafin 2 | 5.4 | Filler |
| Microsit® H20 | 14.4 | Filler |
| Strobelsand P10 | 32.6 | Filler |
| EEW | 406 | |
| | | |
| **Component B** | | |
| mXDA | 38.9 | Amine |
| $Ca(NO_3)_2$ (80% in Glycerin) | 1.1 | Additive |
| Cab-o-Sil® TS-720 | 4.1 | Thickener |
| Millisil W12 | 6.6 | Filler |
| Strobelsand P10 | 33.1 | Filler |
| Microsit® H20 | 16.2 | Filler |
| AHEW | 88 | |

Table 7: Inventive Example 3: (optimized packing densities)

| | [wt.-%] | Function |
|---|---|---|
| **Component A** | | |
| Araldite® GY 240 | 14 | Epoxy resin |
| Araldite® GY 282 | 7.6 | Epoxy resin |
| Araldite® DY-026 SP | 2.7 | Reactive diluent |
| Araldite® DY-T-CH | 2.7 | Reactive diluent |

(continued)

| | [wt.-%] | Function |
|---|---|---|
| **Component A** | | |
| Dynasylan® GLYMO | 3 | Adhesion promoter |
| Cab-o-Sil® TS-720 | 1.2 | Thickener |
| Millisil W12 | 7 | Common filler |
| Nekafin 2 | 6.3 | Filler |
| Microsit® H20 | 16.8 | Filler |
| Strobelsand P10 | 38.7 | Filler |
| EEW | 546 | |
| | | |
| **Component B** | | |
| mXDA | 29.2 | Amine |
| $Ca(NO_3)_2$ (80% in Glycerin) | 0.9 | Additive |
| Cab-o-Sil® TS-720 | 3.1 | Thickener |
| Millisil W12 | 7.7 | Filler |
| Strobelsand P10 | 40.3 | Filler |
| Microsit® H20 | 18.9 | Filler |
| AHEW | 117 | |

Table 8: Inventive Example 4: (optimized packing densities)

| | [wt.-%] | Function |
|---|---|---|
| **Component A** | | |
| Araldite® GY 240 | 24.4 | Epoxy resin |
| Araldite® GY 282 | 13.2 | Epoxy resin |
| Araldite® DY-026 SP | 4.7 | Reactive diluent |
| Araldite® DY-T-CH | 4.7 | Reactive diluent |
| Dynasylan® GLYMO | 3 | Adhesion promoter |
| Cab-o-Sil® TS-720 | 2 | Thickener |
| Millisil W12 | 4.3 | Common filler |
| Supracem 45 | 6.8 | Filler |
| Microsit® H20 | 11.0 | Filler |
| Strobelsand P10 | 25.9 | Filler |
| EEW | 323 | |
| | | |
| **Component B** | | |
| mXDA | 27.6 | Amine |
| $Ca(NO_3)_2$ (80% in Glycerin) | 1.4 | Additive |
| Cab-o-Sil® TS-720 | 1.2 | Thickener |
| Millisil W12 | 8.8 | Filler |
| Strobelsand P10 | 42.5 | Filler |

(continued)

| Component B | | |
|---|---|---|
| Microsit® H20 | 18.5 | Filler |
| AHEW | 123 | |

Table 9: Inventive Example 5: (optimized packing densities)

| | [wt.-%] | Function |
|---|---|---|
| **Component A** | | |
| Araldite® GY 240 | 15.9 | Epoxy resin |
| Araldite® GY 282 | 8.5 | Epoxy resin |
| Araldite® DY-026 SP | 3.1 | Reactive diluent |
| Araldite® DY-T-CH | 3.1 | Reactive diluent |
| Dynasylan® GLYMO | 3 | Adhesion promoter |
| Cab-o-Sil® TS-720 | 1.4 | Thickener |
| Millisil W12 | 5.9 | Common filler |
| Supracem 45 | 9.1 | Filler |
| Microsit® H20 | 15 | Filler |
| Strobelsand P10 | 35.2 | Filler |
| EEW | 436 | |
| | | |
| **Component B** | | |
| mXDA | 19.2 | Amine |
| $Ca(NO_3)_2$ (80% in Glycerin) | 1.0 | Additive |
| Cab-o-Sil® TS-720 | 0.8 | Thickener |
| Millisil W12 | 9.4 | Filler |
| Strobelsand P10 | 48.7 | Filler |
| Microsit® H20 | 21.0 | Filler |
| AHEW | 177 | |

Table 10 below shows the obtained packing densities of Reference Examples 1-4 and obtained packing densities of Inventive Examples 1-5 for various filling degrees.

Table 10: Calculated parameters Reference Examples 1-4 and Inventive Examples 1-5

| | Filling degree in A+B (%) | Packing density in A+B (%) |
|---|---|---|
| **Reference Example 1** | 50 | 34 |
| **Reference Example 2** | 60 | 34 |
| **Reference Example 3** | 70 | 34 |
| **Reference Example 4** | 55 | 34 |
| **Inventive Example 1** | 50 | 67.2 |
| **Inventive Example 2** | 60 | 67.2 |
| **Inventive Example 3** | 70 | 67.2 |
| **Inventive Example 4** | 56 | 68.9 |

(continued)

| | Filling degree in A+B (%) | Packing density in A+B (%) |
|---|---|---|
| **Inventive Example 5** | 70 | 68.9 |

The stationary viscosity in (A) and (B) was determined for Reference Examples 1-4 and Inventive Examples 1-5. Lower viscosities were obtained for the optimized packing density formulation with the same or similar filling degree (cf. Table 11).

Table 11: Measured viscosity Reference Examples 1-4 and Inventive Examples 1-5

| | Stationary viscosity (A) / Pa*s | Stationary viscosity (B) / Pa*s |
|---|---|---|
| **Reference Example 1** | 528 | 1016 |
| **Reference Example 2** | 757 | 800 |
| **Reference Example 3** | 1691 | 671 |
| **Reference Example 4** | 466 | 240 |
| **Inventive Example 1** | 461 | 740 |
| **Inventive Example 2** | 511 | 587 |
| **Inventive Example 3** | 735 | 586 |
| **Inventive Example 4** | 435 | 68 |
| **Inventive Example 5** | 436 | 104 |

As a next step, a formulation containing a low filling degree having a non-optimized packing density (Reference Example 4) and a formulation having 56% filling degree and optimized packing density (Inventive Example 4) and a formulation having an increased filling degree of 70% using an optimized packing density (Inventive Example 5; Note: a formulation with such a high filling degree i.e., 70% could not be obtained by using only Millisil W12, i.e., a non-optimized filler mixture) have been compared.

Creep tests were performed for these three formulations. These experiments showed that the Inventive Example 5 had the best creep performance (smaller displacement under sustained load at elevated temperatures; cf. Table 12 and Figure 1).

Table 12: Measured Dispensing forces and Creep displacement

| | Dispensing forces at RT / N | Creep displacement at 43°C, 29 kN, M12x72 after 65 h / mm |
|---|---|---|
| **Reference Example 4** | not determined | 0.33 |
| **Inventive Example 4** | 703 | 0.28 |
| **Inventive Example 5** | 854 | 0.24 |

Table 13: Used Chemicals

| **Description** | **Name** | **Supplier** |
|---|---|---|
| Epoxy resin | DGEBA - Araldite GY 240 | Hunstman Advanced Materials, Germany |
| Epoxy resin | DGEBF - Araldite GY 282 | Hunstman Advanced Materials, Germany |
| Epoxy resin | BDDGE - Araldite DY-026 | Hunstman Advanced Materials, Germany |
| Epoxy resin | TMPTGE - Araldite DY-T-CH | Hunstman Advanced Materials, Germany |
| Filler | Nekafin 2, CaO, average grain size $d_{50}$ = 16.2 µm, self-packing density= 28.4% | Kalkfabrik Netstal AG<br>CH-8754 Netstal/Switzerland |
| Filler | Microsit® H20, fly ash, average grain size $d_{50}$ = 5.5 µm, self-packing density= 37.7% | temcon solutions GmbH, Germany |

(continued)

| Description | Name | Supplier |
|---|---|---|
| Filler | Strobelsand P10, sand, average grain size $d_{50}$ = 181 μm, self-packing density= 52.8% | Strobel Quarzsand GmbH, Germany |
| Filler | SupraCem 45, portland cement, average grain size $d_{50}$ = 17.7 μm, self-packing density= 40,3% | Schretter & Cie GmbH & Co. KG, Austria |
| Common filler | Millisil W12, Quartz flour, average grain size $d_{50}$ = 16 μm, self-packing density= 34.0% | Quarzwerke, Germany |
| Thickener | CabOSil TS 720 | Cabot corporation, Germany |
| Amine | m-Xylylenediamine, mXDA | MGC, Japan |
| Accelerator | Calcium Nitrate Tetrahydrate | Sigma Aldrich, Germany |
| Solvent | 1,2,3-propanetriol, glycerine | Merck, Germany |

## Claims

**1.** Multi-component resin system suitable for chemical dowels, the multi-component resin system comprising

a resin component (A) comprising at least one reactive resin; and
a hardener component (B) comprising at least one hardener for the at least one reactive resin contained in the resin component (A);
wherein the multi-component resin system comprises at least two fillers ($F_1$, $F_2$),
wherein the at least two fillers ($F_1$, $F_2$) comprise a first filler ($F_1$) and a second filler ($F_2$),
**characterized in that**
the multi-component resin system has a filling degree of more than 55 wt.-%.

**2.** The multi-component resin system according to claims 1 or 2, wherein the multi-component resin system has a static viscosity of not higher than 1500 Pa s.

**3.** The multi-component resin system according to any of the preceding claims, wherein the multi-component resin system has a packing density of more than 35%, preferably more than 45%, more preferably more than 55%, and most preferably more than 65%.

**4.** The multi-component resin system according to any of the preceding claims, wherein each of the fillers of the at least two fillers (F1, F2) are present independently of one another either in the resin component (A) or in the hardener component (B) or in both components (A) and (B),

wherein the quantity ratio of the fillers to one another is selected such that the packing density Φ calculated, preferably by the Toufar model, for the at least two fillers ($F_1$, $F_2$) in a mortar mass obtainable by mixing the components of the multi-component resin system is more than 35%, preferably more than 45%, more preferably more than 55%, and most preferably more than 65%,
wherein the average particle size $d_{50}$ of each of the at least two fillers ($F_1$, $F_2$) differ from each other of the at least two fillers ($F_1$, $F_2$).

**5.** Process for preparing a multi-component resin system suitable for chemical dowels, the process comprising the steps of

1. Providing at least two fillers ($F_1$, $F_2$), wherein the at least wo fillers each have an average particle size $d_{50}$ in the range of from 1 to 800 μm and wherein the average particle sizes $d_{50}$ of each of the at least two fillers ($F_1$, $F_2$) differ from each other of the at least two fillers ($F_1$, $F_2$);
2. Providing a list of fillers comprising the at least two fillers ($F_1$, $F_2$);
3. Selecting two selected fillers ($F_{S1}$, $F_{S2}$) from the list of fillers having the largest ratio of average particle sizes $d_{50}$ among all fillers of the list of fillers and removing the two selected fillers ($F_{S1}$, $F_{S2}$) from the list fillers;
4. Calculating the maximum packing density Φ und the grain volumes of a mixture of the two selected fillers ($F_{S1}$)

and ($F_{S2}$), ($y_1$) and ($y_2$), for a maximum packing density $\Phi$;
5. Determining the average particle size $d_{50}$ of the mixture of the two selected fillers ($F_{S1}$) and ($F_{S2}$);
6. Adding the mixture of the two selected fillers ($F_{S1}$) and ($F_{S2}$) to the list of fillers;
7. If the list of fillers comprises more than one filler, reprocessing steps 3-6;
8. Calculating the mass quantity ratios of the at least two fillers ($F_1$, $F_2$) from the calculated grain volume ratios via the bulk density of the at least two fillers ($F_1$, $F_2$);
9. Providing a resin component (A) comprising at least one reactive resin, and a hardener component (B) comprising at least one hardener for the at least one reactive resin contained in the resin component (A);
10. Mixing the resin component (A) and/or the hardener component (B) with the at least two fillers ($F_1$, $F_2$) in the quantity ratio as determined in step 6) yielding the multi-component resin system.

**6.** The process according to claim 5, wherein step 4 is carried out using the Toufar model according to formula (I)

$$\Phi = \frac{1}{\frac{y_1}{\Phi_1}+\frac{y_2}{\Phi_2}-y_2*\left(\frac{1}{\Phi_2}-1\right)*\frac{d_{50,2}-d_{50,1}}{d_{50,1}+d_{50,2}}*k_s} \qquad \text{(I)}$$

wherein

$$k_s = 1-\frac{1-(1+4*x)}{(1+x)^4}, \qquad \text{(II)}$$

$$x = \frac{y_1}{y_2} * \frac{\frac{\Phi_2}{\Phi_1}}{1-\Phi_2}, \qquad \text{(III)}$$

and

$$y_2 = 1 - y_1 \qquad \text{(IV)}$$

and wherein

$d_{50}$ $d_{50,2}$ = the average particle sizes of the selected two fillers ($F_{S1}$, $F_{S2}$)
$\Phi_1$, $\Phi_2$ = the inherent packing densities of the selected two fillers ($F_{S1}$, $F_{S2}$); quotient of grain density and bulk density
$y_1$, $y_2$ = the grain volumes of the two selected fillers ($F_{S1}$, $F_{S2}$); $0 < y_1, y_2 < 1$
$k_s$ = a factor that accounts for statistical possibility of an optimal packing as a function of amounts and packing densities, quotient of bulk density of $F_{S2}$ and void volume of $F_{S1}$
x = the quotient of the bulk volume of $F_{S2}$ and the void volume of $F_{S1}$

wherein the grain density, the grain volume, and the void volume are preferably determined using a pycnometer, and wherein the bulk density is preferably determined using a measuring cylinder.

**7.** The process according to claims 5 or 6, wherein step 5 is carried out by preparing the mixture of the at least two selected fillers ($F_{S1}$) and ($F_{S2}$) and measuring the average particle size $d_{50}$ or by determining a sieve line for the mixture of the at least two selected fillers from the sieve lines of each of the at least two selected fillers ($F_{S1}$) and ($F_{S2}$) and determining the average particle size $d_{50}$ therefrom.

**8.** The process according to any of the preceding claims 5 to 7, wherein the packing density is more than 35%, preferably more than 45%, more preferably more than 55%, and most preferably more than 65%.

**9.** The multi-component resin system according to any of the preceding claims 1 to 4 or the process according to any of the preceding claims 5 to 8, wherein.

(i) the at least one reactive resin in resin component (A) is a curable epoxy resin having an average epoxy functionality of 2 or greater, and the at least one curing agent in hardener component (B) is a curing agent for the

curable epoxy resin, preferably at least one amine reactive to epoxy groups having an NH functionality of 2 or greater; or
(ii) the at least one reactive resin in resin component (A) is a free-radically curable vinyl ester resin, and the at least one curing agent in hardener component (B) is a curing agent for the free-radically curable vinyl ester resin, preferably a peroxide; or
(iii) the at least one reactive resin in resin component (A) is a curable isocyanate resin having an average NCO functionality of 2 or greater, and the at least one curing agent in hardener component (B) is a curing agent for the curable isocyanate resin, preferably an amine reactive to isocyanates having an average NH functionality of 2 or greater.

**10.** The multi-component resin system according to any of the preceding claims 1 to 4, 9 or the process according to any of the preceding claims 5 to 9, wherein the average particle size $d_{50}$ of the first filler ($F_1$) is in the range of from 10 to 800 μm, preferably from 15 to 200 μm.

**11.** The multi-component resin system according to any of the preceding claims 1 to 4, 9 to 10 or the process according to any of the preceding claims 5 to 10, wherein the size difference of the mean particle size $d_{50}$ of the filler having the largest mean particle size of the at least two fillers ($F_1$, $F_2$) to the filler having the lowest mean particle size of the at least two fillers ($F_1$, $F_2$) is in the range of from 100% to 1000%, preferably from 150% to 500%.

**12.** The multi-component resin system according to any of the preceding claims 1 to 4, 9 to 11 or the process according to any of the preceding claims 5 to 11, wherein the at least two fillers ($F_1$, $F_2$) are independently from each other selected from a group consisting of oxides, hydroxides, sulfates, borates and nitrides of silicon, aluminum, iron, magnesium, calcium, barium, titanium, zirconium, sodium, potassium, ammonium, and their mixed oxides, hydroxides, sulfates, borates and nitrides, and mixtures thereof; are preferably selected from a group consisting of silica sand, glass, corundum, porcelain, earthenware, barite, feldspar, granulated blast furnace slag, gypsum, Portland cement, talc, fly ash, limestone, and mixtures thereof, preferably selected from the group consisting of calcium oxide, fly ash, silica sand, quartz powder, Portland cement, and mixtures thereof.

**13.** Mortar mass prepared by mixing the resin component (A) and the hardener component (B) of the multi-component resin system according to any of the preceding claims 1 to 4, 9 to 12.

**14.** Use of the mortar composition according to claim 13 or the multi-component resin system according to any of the preceding claims 1 to 4, 9 to 12 for chemically fixing structural elements in holes, in particular drilled holes, or crevices.

**15.** Use of the at least two fillers ($F_1$, $F_2$) in the mortar composition according to claim 13 or the multi-component resin system according to any of claims 1 to 4, 9 to 12 to increase the creep resistance thereof.

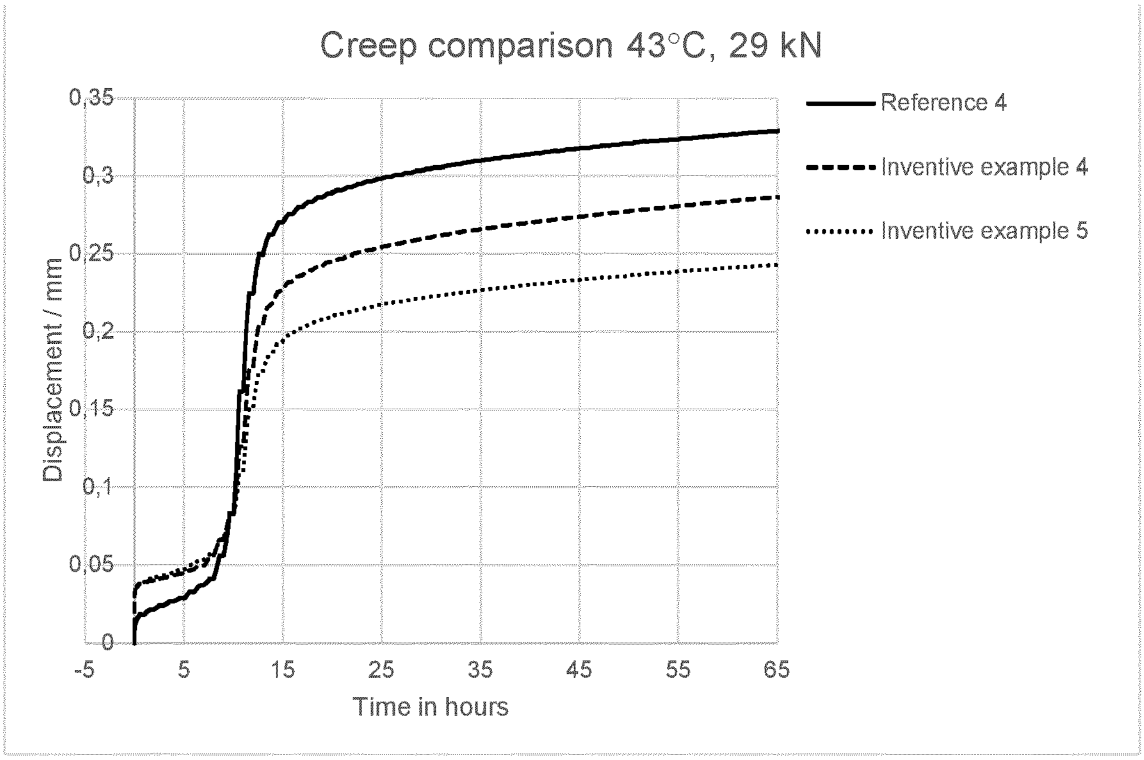
Creep comparison 43°C, 29 kN
Reference 4
Inventive example 4
Inventive example 5
Displacement / mm
0,35
0,3
0,25
0,2
0,15
0,1
0,05
0
-5
5
15
25
35
45
55
65
Time in hours

Figure 1

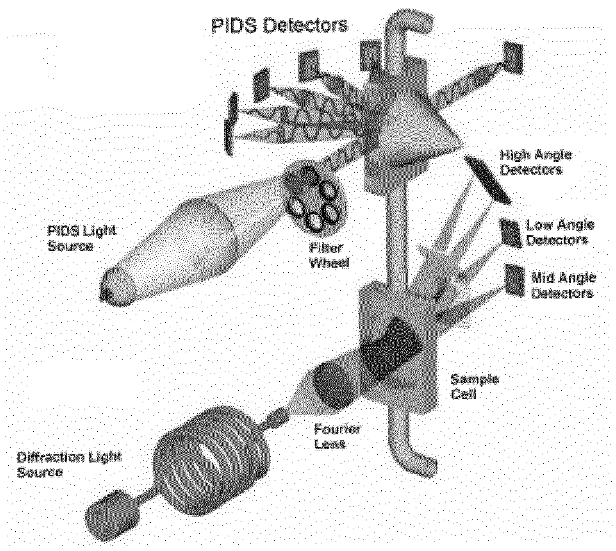
PIDS Detectors
High Angle
Detectors
PIDS Light
Source
Filter
Wheel
Low Angle
Detectors
Mid Angle
Detectors
Sample
Cell
Fourier
Lens
Diffraction Light
Source

Figure 2

Europäisches Patentamt
European Patent Office
Office européen des brevets

# EUROPEAN SEARCH REPORT

Application Number
EP 23 21 7128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/380571 A1 (BÜRGEL THOMAS [DE] ET AL) 1 December 2022 (2022-12-01) * paragraphs [0008], [0010]-[0013], [0034]-[0046], [0054], [0057], [0073]-[0080], [0089]-[0091], Examples, claims * | 1-15 | INV. C04B26/14 C04B26/16 C04B26/18 C04B40/00 |
| A | US 2023/021234 A1 (GAEFKE GERALD [DE] ET AL) 19 January 2023 (2023-01-19) * the whole document * | 1-15 | |
| A | US 7 807 740 B2 (HILTI AG [LI]) 5 October 2010 (2010-10-05) * the whole document * | 1-15 | |
| A | WO 2021/185965 A1 (HILTI AG [LI]) 23 September 2021 (2021-09-23) * the whole document * | 1-15 | |
| | | | TECHNICAL FIELDS SEARCHED (IPC) |
| | | | C04B |

The present search report has been drawn up for all claims

1

| Place of search | Date of completion of the search | Examiner |
|---|---|---|
| Munich | 4 June 2024 | Nemes, Csaba A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 21 7128

This annex lists the patent family members relating to the patent documents cited in the above-mentioned European search report. The members are as contained in the European Patent Office EDP file on
The European Patent Office is in no way liable for these particulars which are merely given for the purpose of information.

04-06-2024

| Patent document cited in search report | Publication date | Patent family member(s) | Publication date |
|---|---|---|---|
| US 2022380571 A1 | 01-12-2022 | AU 2020403372 A1 | 19-05-2022 |
| | | CA 3155531 A1 | 17-06-2021 |
| | | CN 114641461 A | 17-06-2022 |
| | | EP 3835279 A1 | 16-06-2021 |
| | | EP 4073012 A1 | 19-10-2022 |
| | | JP 2023505542 A | 09-02-2023 |
| | | KR 20220113361 A | 12-08-2022 |
| | | US 2022380571 A1 | 01-12-2022 |
| | | WO 2021115808 A1 | 17-06-2021 |
| US 2023021234 A1 | 19-01-2023 | AU 2020404588 A1 | 02-06-2022 |
| | | CA 3161171 A1 | 24-06-2021 |
| | | CN 114761481 A | 15-07-2022 |
| | | EP 3838981 A1 | 23-06-2021 |
| | | EP 4077524 A1 | 26-10-2022 |
| | | JP 2023506065 A | 14-02-2023 |
| | | KR 20220117213 A | 23-08-2022 |
| | | US 2023021234 A1 | 19-01-2023 |
| | | WO 2021122102 A1 | 24-06-2021 |
| US 7807740 B2 | 05-10-2010 | AT E552223 T1 | 15-04-2012 |
| | | AU 2007254590 A1 | 10-07-2008 |
| | | CA 2614050 A1 | 21-06-2008 |
| | | CN 101468893 A | 01-07-2009 |
| | | EP 1935860 A2 | 25-06-2008 |
| | | ES 2382393 T3 | 07-06-2012 |
| | | JP 2008156645 A | 10-07-2008 |
| | | PL 1935860 T3 | 31-08-2012 |
| | | US 2008171807 A1 | 17-07-2008 |
| WO 2021185965 A1 | 23-09-2021 | AU 2021236848 A1 | 25-08-2022 |
| | | AU 2021238693 A1 | 25-08-2022 |
| | | CA 3165973 A1 | 23-09-2021 |
| | | CA 3165986 A1 | 23-09-2021 |
| | | EP 4121472 A1 | 25-01-2023 |
| | | EP 4121473 A1 | 25-01-2023 |
| | | JP 2023518072 A | 27-04-2023 |
| | | JP 2023518073 A | 27-04-2023 |
| | | KR 20220157376 A | 29-11-2022 |
| | | KR 20220157942 A | 29-11-2022 |
| | | US 2023111109 A1 | 13-04-2023 |
| | | US 2023114437 A1 | 13-04-2023 |
| | | WO 2021185965 A1 | 23-09-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1935860 A1
- DE 19531649 A1
- WO 10108939 A1
- US 3297745 A
- US 3772404 A
- US 4618658 A
- GB 2217722 A1
- DE 3744390 A1
- DE 4131457 A1
- US 2011071234 A
- DE 2312559 A1
- EP 44352 A1
- DE 19902685 A1
- EP 0684906 A1
- DE 4111828 A1
- DE 19961342 A1
- WO 2010108939 A1
- DE 102011077248 B1
- DE 19956509 A1
- US 20020091214 A1
- DE 3226602 A1
- EP 0432087 A1
- EP 1371671 A1
- US 2011071234 A1
- DE 102011078785 A1
- DE 102011078785
- DE 102004035542 A1
- EP 1329469 A1
- EP 1975190 A1
- EP 2017260 A
- EP 0387418 A2


### Non-patent literature cited in the description


- **NILFOROUSH, R** ; **NILSSON, M** ; **SÖDERLIND, G** ; **ELFGREN, L.** Long-Term Performance of Adhesive Bonded Anchors. *Structural Journal*, 2016, vol. 113 (2), 251-261
- **A. D. MCNAUGHT** ; **A. WILKINSON**. IUPAC Compendium of Chemical Terminology. Blackwell Scientific Publications, 1997
- **MICHAEL DORNBUSCH** ; **ULRICH CHRIST** ; **ROB RASING**. Epoxy Resins. Vincentz Network GmbH & Co KG, 2015
- **LEE H** ; **NEVILLE K**. Handbook of Epoxy Resins. McGraw-Hill, 1982
- *CHEMICAL ABSTRACTS*, 61788-44-1
- **PER GOLTERMANN**. Vagn Johansen and Lars PalbØl ACI Materials Journal. *Packing of aggregates*, September 1997, vol. 94 (5)